# EUROPÄISCHE PATENTSCHRIFT

(11) **EP 4 080 830 B1**
(45) Veröffentlichungstag und Bekanntmachung des Hinweises auf die Patenterteilung: **20.08.2025**
(21) Anmeldenummer: 21169982.2
(22) Anmeldetag: 22.04.2021
(51) Int. Cl.: H04L 9/40

(54) **VERFAHREN ZUM ÜBERPRÜFEN UND STEUERN EINES VON EINEM IP-FÄHIGEN HEIMNETZ-ENDGERÄT AUSGEHENDEN DATENVERKEHRS UND KOMMUNIKATIONSSYSTEM**
METHOD FOR CHECKING AND CONTROLLING DATA TRAFFIC ORIGINATING FROM AN IP-CAPABLE HOME NETWORK TERMINAL AND COMMUNICATION SYSTEM
PROCÉDÉ DE VÉRIFICATION ET DE COMMANDE D'UN TRAFIC DE DONNÉES SORTANT D'UN TERMINAL DE RÉSEAU DOMESTIQUE COMPATIBLE IP ET SYSTÈME DE COMMUNICATION

(43) Veröffentlichungstag der Anmeldung: 26.10.2022
(73) Patentinhaber: Deutsche Telekom AG, 53113 Bonn (DE)
(72) Erfinder: BERTRAM, Gabriel, 50969 Köln (DE)
(74) Vertreter: Blumbach · Zinngrebe Patentanwälte PartG mbB

(56) Entgegenhaltungen:
- US-A1- 2020 067 974
- US-A1- 2020 204 580

## Beschreibung

Die Erfindung betrifft ein Verfahren zum Überprüfen und Steuern eines von einem IP-fähigen Heimnetz-Endgerät ausgehenden, IP-Pakete enthaltenen Datenverkehrs sowie ein Kommunikationssystem, welches insbesondere zum Überprüfen und Steuern eines solchen Datenverkehrs ausgebildet ist.

Mit der zunehmenden Anzahl an Smart Home Geräten in privaten Haushalten steigt auch die Gefahr von DoS-Angriffen, auch Denial of Service Angriffe genannt, oder DDoS-Angriffen, auch Distributed Denial of Service Angriffe genannt, die von infizierten Smart Home Geräten durchgeführt werden.

Generelles Ziel von DoS-Angriffen ist es, die Verfügbarkeit eines Ziels, beispielsweise eines Internetdienstes, eines Internet-Servers oder andere Netzwerkgeräte durch eine hohe Anzahl an Anfragen zu reduzieren oder zu verhindern, so dass legitime Anfragen nicht mehr beantwortet werden können. Ursprünglich wurde für solche DoS-Angriffe ein Quellgerät infiziert, welches dann eine hohe Anzahl an Anfragen an das angegriffene Ziel sendet. Im Unterschied hierzu werden bei sogenannten DDoS-Angriffen eine Vielzahl voll Quellgeräten einbezogen bzw. verseucht, deren Angriffe auf Ziele schwerer zu verhindern sind.

Seit einigen Jahren werden im häufiger Smart Home Geräte aufgrund ihrer hohen Anzahl, weltweiten Verteilung und oft vorhandenen Sicherheitslücken manipuliert und zu sogenannten Botnetzen hinzugefügt. Ein Botnetz ist dabei eine Anzahl an Geräten, die durch einen Angreifer kontrolliert und gesteuert werden, ohne dass Besitzer der Geräte dies merken. Ein Beispiel für ein großes Botnetz bestehend aus IoT (Internet of Things)-Smart Home Geräten ist das Mirai-Botnetz.

Es gibt verschiedene Arten von DoS- oder DDos-Attacken. Diese können auf Basis des ISO/OSI-Models eingeordnet werden. Nachfolgend werden einige typische Angriffe aufgelistet:
HTTP GET Food Angriffe auf der Anwendungsschicht:
Hierbei sendet eine infizierte Quelle eine hohe Anzahl an HTTP GET-Nachrichten des Hypertext Transfer Protokolls an einen Webserver. Dieser wird durch die Beantwortung der Anfragen derart überlastet, dass er keine legitimen Anfragen mehr beantworten kann.

SYN Flood Angriffe auf der Transportprotokollschicht: Hierbei sendet eine infizierte Quelle eine hohe Anzahl an TCP SYN- Nachrichten, um die Verarbeitung von Verbindungsaufbauten von Servern zu stören. Die Server werden hierbei insbesondere durch die Speicherung der TCP Sessions überlastet.

Volumenbasierte Angriffe: Hierbei werden eine hohe Anzahl an UDP (User Datagram Protocol)-Nachrichten oder ICMP (Internet Control Message Protocol)-Nachrichten beispielsweise zu einem Server übertragen, sodass dieser überlastet wird und legitime Anfragen nicht mehr empfangen oder beantworten kann.

Angemerkt sei, dass Smart Home Geräte als Bestandteile eines Botnetzes je nach Geräteart alle oben genannten DoS oder DDos Angriffe durchführen können.

Aus der US 2020/0204580 A1 ist ein Verfahren sowie ein System bekannt, die unter Anwendung einer Blockchain DDoS-Angiffe, auch als Distributed-Denial-of-Service-Attacken bekannt, abwehren können.

Aus der US 2020/0067974 A1 ist ein lokaler Netzwerkrouter bekannt, der eine kooperative Abwehr von von einem lokalen Netzwerk ausgehenden DDoS-Angiffen, auch als Distributed-Denial-of-Service-Attacken bekannt, ausführt.

Der vorliegenden Erfindung liegt daher die Aufgabe zugrunde, ein Verfahren zum Überprüfen und Steuern eines von einem IP-fähigen Heimnetz-Endgerät ausgehenden Datenverkehrs und ein Kommunikationssystem zur Verfügung zu stellen, mit denen es möglich ist, die Auswirkungen eines DoS oder DDoS Angriffs aus einem Heimnetzwerk heraus deutlich zu reduzieren. Insbesondere kann durch das Verfahren und das Kommunikationssystem erreicht werden, dass IP-fähige Heimnetz-Endgeräte nach einer Infizierung zumindest daran gehindert werden können, DDoS- oder DoS-Angriffe auf Server, die zum Beispiel über das Internet erreichbar sind, in dem Maße durchzuführen, dass die Server unkontrolliert überflutet werden.

Ein Kerngedanke der Erfindung kann darin gesehen werden, den Datenverkehr von IP-fähigen Heimnetz-Endgeräten, welche über ein Heimnetz mit einem IP-fähigen Heimnetz-Router verbunden sind, auf Legitimität zu überwachen und zu steuern bzw. gegebenenfalls zu begrenzen. Hierzu werden die in einem Heimnetz einsetzbaren Smart Home Geräte kategorisiert, das heißt in definierte Gerätetypen, wie zum Beispiel Rauchmelder, Bewegungsmelder oder Überwachungskameras eingeteilt, wobei einem an das Heimnetz angebundenen Heimnetz-Endgerät eine ihm entsprechende Gerätetyp-Information zugeordnet wird. In der Regel, wird die Gerätetyp-Information in dem jeweiligen Heimnetz-Endgerät gespeichert und beispielsweise bei einem initialen Verbindungsaufbau zum Heimnetz-Router übertragen. Für jeden definierten Gerätetyp wird ein vordefiniertes Nutzungsprofil, nachfolgend auch Heimnetz-Endgerätabhängiges Datenkommunikations-Nutzungsprofil genannt, erstellt. Das Datenkommunikations-Nutzungsprofil definiert insbesondere die reguläre Funktion bzw. den bestimmungsgemäßen Rahmen, innerhalb dessen der entsprechende Gerätetyp eine Datenkommunikation durchführen kann. Mehrere Heimnetz-Endgerät-abhängige Datenkommunikations-Nutzungsprofile können in dem Heimnetz-Router gespeichert werden. Der Heimnetz-Router ist vorzugsweise dazu ausgebildet, automatisch anhand einer von einem Heimnetz-Endgerät empfangenen Gerätetyp-Information den Gerätetyp des jeweiligen Heimnetz-Endgeräts zu erkennen und diesem Heimnetz-Endgerät das jeweilige Heimnetz-Endgerät-abhängige Datenkommunikations-Nutzungsprofil zuzuordnen. Anhand des Heimnetz-Endgerät-abhängigen Datenkommunikations-Nutzungsprofils kann der Heimnetz-Router den vom dazugehörenden Heimnetz-Endgerät ausgehenden Datenverkehr überwachen und gegebenenfalls begrenzen.

Auf diese Weise kann der Heimnetz-Router insbesondere verhindern, dass ein Heimnetz-Endgerät, welches zum Beispiel Teil eines Botnetzes ist, massive Anfragen-Nachrichten generieren kann, die zum Beispiel einen Ziel-Server des Internets überlasten und somit arbeitsunfähig machen könnten.

IP-fähige Heimnetz-Endgeräte werden nachfolgen auch als Smart Home Geräte bezeichnet.

Angemerkt sei an dieser Stelle, dass mithilfe der Erfindung die bösartige Einbindung eines Smart Home Geräts in ein Botnetz nicht verhindert werden kann; Wohl aber können die Auswirkungen eines solchen Angriffs dank der Erfindung deutlich reduziert werden, sodass es im Idealfall weder zu einem Ausfall noch zu einer Überlast eines Netzwerkgeräts führt.

Das oben genannte technische Problem wird zum einen durch die Verfahrensschritte des Anspruchs 1 und durch die Merkmale des Anspruchs 9 gelöst.

Die Erfindung wird nachfolgend anhand einiger Ausführungsbeispiele in Verbindung mit den beiliegenden Zeichnungen näher erläutert. Darin zeigen:
- Figur 1: ein beispielhaftes Kommunikationssystem in dem die Erfindung verwirklicht ist,
- Figur 2: einen beispielhaften schematischen Funktionsablauf des in Figur 1 gezeigten Kommunikationssystems zur automatischen Erkennung eines Gerätetyps, zur automatischen Zuordnung eines Datenkommunikations-Nutzungsprofils und zur Reduzierung des von einem Heimnetz-Endgerät ausgehenden Datenverkehrs, und
- Figur 3: einen beispielhaften Ablauf einer automatischen Zuordnung eines Datenkommunikations-Nutzungsprofilzuordnung und einer beispielhaften manuellen Zuordnung eines Datenkommunikations-Nutzungsprofils.

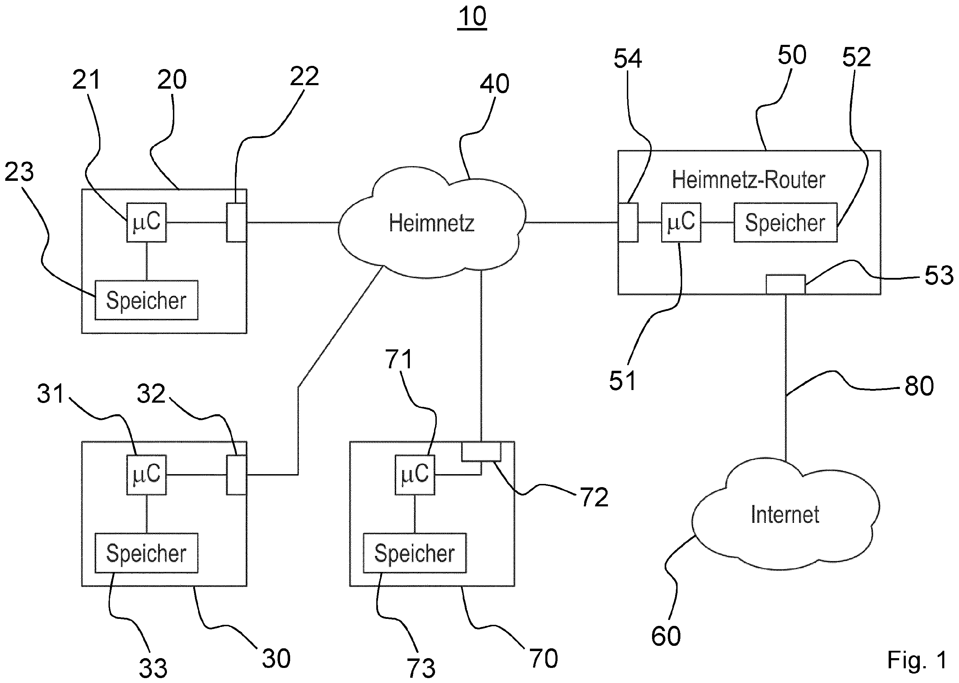

Figur 1 zeigt ein beispielhaftes Kommunikationssystem 10, welches zumindest teilweise beispielsweise in einem Wohnraum oder in einem Wohnhaus installiert werden kann, Das Kommunikationssystem 10 weist beispielsweise mehrere vorzugsweise IP-fähige Heimnetz-Endgeräte, nachfolgend auch als Smart Home Geräte bezeichnet, auf, die über ein Heimnetz 40 mit wenigstens einem IP-fähigen Heimnetz-Router 50 verbunden werden können, Auf diese Weise kann den IP-fähigen Heimnetz-Endgeräten Zugang zu einem externen IP-Kommunikationsnetz 60 ermöglicht werden. Bei dem externen Kommunikationsnetz 60 kann es sich um das Internet handeln.

Lediglich beispielhaft sind in Figur 1 drei IP-fähige Heimnetz-Endgeräte 20, 30 und 70 dargestellt, welche über das Heimnetz 40 mit dem IP-fähigen Router 50 verbunden werden können. Angemerkt sei an dieser Stelle, dass ein IP-fähiges Heimnetz-Endgerät vorzugsweise ein Endgerät ist, welches dazu ausgebildet ist, IP-Pakete über den Router 50 in das externe IP-Kommunikationsnetz 60 zu übertragen. Bei den IP-fähigen Heimnetz-Endgeräten 20, 30 und 70 kann es sich beispielsweise um Haushaltsgeräte, wie zum Beispiel Lichtquellen und Jalousien, um Gräte aus der Unterhaltungselektronik und insbesondere um IoT-Heimnetz-Endgeräte handeln, wie zum Beispiel Rauchmelder, Bewegungsmelder, Türkontakte, Thermostate oder Überwachungskameras. Die Heimnetz-Endgeräte 20, 30 und 70 können über drahtlose oder drahtgebundene Verbindungen des Heimnetzes 40 mit dem IP-fähigen Heimnetz-Router 50 kommunizieren. Vorzugsweise kann es sich bei dem Heimnetz 40 beispielsweise um ein WLAN (Wireless Local Area Network) oder um ein drahtgebundenes LAN (Local Area Network) handeln. Dementsprechend kann jedes der Heimnetz-Endgerät 20, 30 und 70 eine drahtgebundene oder drahtlose Kommunikationsschnittstelle 22, 32 bzw. 72 aufweisen, um über das Heimnetz 40 mit dem Router 50 kommunizieren zu können. In entsprechender Weise weist der IP-fähige Heimnetz-Router 50 eine drahtlose oder drahtgebundene Kommunikationsschnittstelle 54 zum Verbinden mit dem Heimnetz 40 auf. Im vorliegenden Beispiel sei angenommen, dass es sich bei dem Heimnetz 40 um ein WLAN-Netz handelt, und die Kommunikationsschnittstellen 22, 32, 72 und 54 als drahtlose Kommunikationsschnittstellen ausgebildet sind.

Angemerkt sei, dass die Kommunikationsschnittstellen 22, 32 und 72 der Heimnetz-Endgeräte 20, 30 und 70 jeweils Bestandteil eines Netzwerkadapter sein können, denen jeweils in bekannter Weise eine weltweit eindeutige MAC (Medium Access Control)-Adresse zugeordnet ist, die vorzugsweise als Hardware-Adresse in den jeweiligen Netzwerkadapter des Heimnetz-Endgeräts 20, 30 bzw. 70 gespeichert ist. Bei dem vorliegenden Beispiel sei angenommen, dass es sich bei den Heimnetz-Endgeräten 20 und 70 beispielsweise um Rauchmelder handelt, während das Heimnetz-Endgerät 30 eine Überwachungskamera sein kann.

Um einen von den Heimnetz-Endgeräten 20, 30 und 70 bereitgestellten Datenverkehr über das externe IP-Kommunikationsnetz 60 zum Beispiel zu einem Ziel-Server weiterleiten zu können, weist der IP-fähige Heimnetzt-Router 50 eine weitere Kommunikationsschnittstelle 53 auf, über die eine Anbindung an das Internet 60 erfolgen kann. Angemerkt sei, dass der IP-fähige Heimnetz-Router 50 über ein drahtloses oder drahtgebundenes Zugangsnetz 80 an das Internet 60 angebunden werden kann. Je nach Zugangsnetz 80 kann es sich bei der Kommunikationsschnittstelle 53 um eine drahtgebundene Schnittstelle, wie zum Beispiel eine DSL-Kommunikationsschnittstelle, oder um eine drahtlose Kommunikationsschnittstelle handeln, die gemäß einem Mobilfunkstandard, wie zum Beispiel dem LTE- UMTS- oder 5G-Standard ausgebildet sein kann.

Die Heimnetz-Endgeräte 20, 30 und 70 weisen jeweils eine Steuereinrichtung 21, 31 bzw. 71 auf, die vorzugsweise als Mikroprozessor oder Mikrocontroller ausgebildet sein kann. Die Steuereinrichtungen 21, 31 und 71 sind insbesondere jeweils dazu ausgebildet, den Betrieb des jeweiligen Heimnetz-Endgeräts zu steuern und zu überwachen. Hierzu kann in den Heimnetz-Endgeräten 20, 30 und 70 vorzugsweise jeweils ein Betriebssystem oder eine Firmware gespeichert werden, welche in einer Speichereinrichtung 23 des Heimnetz-Endgeräts 20, in einer Speichereinrichtung 33 des Heimnetz-Endgeräts 30 und in einer Speichereinrichtung 73 des Heimnetz-Endgeräts 70 abgelegt werden kann. Zudem kann in den Speichereinrichtungen 23, 33 und 73 jeweils mindestens ein Kommunikationsprotokoll wie zum Beispiel ein Kommunikationsprotokoll zur automatischen Zuweisung von Netzwerkkonfigurationsdaten, zum Beispiel das DHCP (Dynamic Host Configuration Protocol), und/oder das TCP/IP Protokoll, und/oder ein Ethernet-Protokoll und/oder das SIP (Session Initiation Protocol), und/oder das UDP und/oder das ICMP gespeichert werden, welche von der jeweiligen Steuereinrichtung 21, 31 bzw. 71 ausgeführt werden können.

Angemerkt sei, dass die Heimnetz-Endgeräte 20, 30 und 70 vordefinierten Kategorien oder Gerätetypen zugeordnet werden können. Um beispielsweise die beiden Heimnetz-Endgeräte 20 und 30 einer bestimmten Kategorie zuzuordnen, wird in den Heimnetz-Endgeräten 20 und 30 jeweils eine vorbestimmte Gerätetyp-Information gespeichert, welche einen vorgegebenen Gerätetyp bezeichnet. Gemäß dem vorliegenden Beispiel wird in der Speichereinrichtung 23 eine Gerätetyp-Information gespeichert, die das Heimnetz-Endgerät 20 als Rauchmelder identifiziert. In der Speichereinrichtung 33 wird eine Gerätetyp-Information abgelegt, welche das Heimnetz-Endgerät 30 als eine Überwachungskamera identifiziert Wie nachfolgend noch detailliert erläutert wird, werden die in den Heimnetz-Endgeräten 20 und 30 gespeicherten Gerätetyp-Informationen vom Heimnetz-Router 50 benötigt, um den Heimnetz-Endgeräten 20 und 30 jeweils ein Heimnetz-Endgerättyp-abhängiges Datenkommunikations-Nutzungsprofil zuzuordnen zu können.

Ähnlich den Heimnetz-Endgeräten weist der Heimnetz-Router 50 eine Steuereinrichtung 51 auf, die als Mikrocontroller oder Mikroprozessor ausgebildet sein kann. Ferner weist der Router 50 eine Speichereinrichtung 52 auf, in der ein Betriebssystem oder eine Firmware gespeichert sein kann. Die Steuereinrichtung 51 ist vorzugsweise dazu ausgebildet, unter Verwendung des Betriebssystems oder der Firmware den Betrieb des Heimnetz-Routers 50 zu überwachen und zu steuern. In der Speichereinrichtung 52 kann zudem jeweils mindestens ein Kommunikationsprotokoll wie zum Beispiel ein Kommunikationsprotokoll zur automatischen Zuweisung von Netzwerkkonfigurationsdaten, zum Beispiel das DHCP (Dynamic Host Configuration Protocol), und/oder das TCP/IP Protokoll, und/oder ein Ethernet-Protokoll und/oder das SIP (Session Initiation Protocol), und/oder das UDP und/oder das ICMP gespeichert werden, welche von der Steuereinrichtung 51 ausgeführt werden können.

In der Speichereinrichtung 52 des Heimnetz-Routers 50 können mehrere verschiedene IP-Adressen gespeichert sein, die vorzugsweise private IP-Adressen sind, welche z. B. frei aus den in RFC 1918 festgelegten privaten IP-Adressbereichen vergeben werden. Bereits an dieser Stelle sei erwähnt, dass die IP-Adressen in einer noch zu beschreibenden Art und Weise den Heimnetz-Endgeräten 20, 30 und 70 zugeordnet werden können. Weiterhin sind in der Speichereinrichtung 52 vorzugsweise mehrere vordefinierte Heimnetz-Endgerätetyp-abhängige Datenkommunikations-Nutzungsprofile gespeichert, die jeweils insbesondere den für einen bestimmten Gerätetyp vorgegebenen Rahmen bzw. Umfang einer Datenkommunikation, die vom jeweiligen Gerätetyp durchgeführt werden darf, definieren.

Für einen Heimnetz-Endgerätetyp "Rauchmelder" kann das entsprechende Datenkommunikations-Nutzungsprofil A folgende Regeln bzw. Datenverkehrs-bezogene Informationen enthalten:
- Maximale Anzahl paralleler TCP-Verbindungen: Diese Anzahl bildet einen oberen Schwellenwert, bis zu dem Rauchmelder gleichzeitig TCP-Verbindungen aufbauen und aufrechterhalten darf. Im vorliegenden Beispiel sei die maximale Anzahl beispielsweise 5.
- Zulässige Protokolle: Das sind Protokolle, die von einem Rauchmelder verwendet werden dürfen. Hierzu zählen zum Beispiel TCP (Transmission Control Protocol), UDP (User Datagramme Protocol), SIP (Session Initiation Protocol).

Für einen Heimnetz-Endgerätetyp "Überwachungskamera" kann das entsprechende Datenkommunikations-Nutzungsprofil B folgende Regeln bzw. Datenverkehrs-bezogene Informationen enthalten:
- Datenrate: Das ist vorzugsweise ein maximaler Schwellenwert, bis zu der eine Überwachungskamera Daten senden darf. Beispielsweise beträgt die Datenrate 10 Mbps
- Maximale Anzahl paralleler TCP-Verbindungen: z.B. 10
- Zulässige Protokolle: TCP, UDP, SIP, RTP (Realtime Transmission Protocol), HTTP

Darüber hinaus könnte in wenigstens einem Datenkommunikations-Nutzungsprofil beispielsweise auch die maximale Anzahl an Anforderungs-Nachrichten, die der jeweilige Gerätetyp vorzugsweise gleichzeitig oder während eines vorgegebenen Zeitintervalls übertragen darf, festgelegt werden. Typische Anforderungs-Nachrichten sind beispielsweise SYN-Nachrichten, die zum Aufbauen von TCP-Verbindungen genutzt werden, und HTTP GET Anforderungsnachrichten, die zum Anfordern von Web-Inhalten benötigt werden.

Nachfolgend wird die Funktionsweise des in Figur 1 beispielhaft dargestellten Kommunikationssystems 10 näher erläutert. Insbesondere wird eine beispielhafte Arbeitsweise des Kommunikationssystems 10 zum Überprüfen und Steuern bzw. Begrenzen eines von dem IP-fähigen Heimnetz-Endgeräts 20 und/oder von dem Heimnetzwerk 30 ausgehenden IP-basierten Datenverkehrs, welcher insbesondere IP-Pakete enthält, geschildert.

Damit die Heimnetz-Endgeräte 20, 30 und 70 an einer Netzwerkkommunikation innerhalb des Heimnetzes 40 und im Internet 60 teilnehmen können, benötigt jedes der Heimnetz-Endgeräte eine IP-Adresse. Eine IP-Adresse wird vorzugsweise durch den Heimnetz-Router 50 den jeweiligen Heimnetz-Endgeräten 20, 30 und 70 zugeteilt. Die Zuteilung kann in bekannter Weise mithilfe eines Kommunikationsprotokolls zur automatischen Zuweisung von Netzwerkkonfigurationsdaten, welches beispielsweise das zuvor erwähnte DHCP-Protokoll ist, erfolgen.

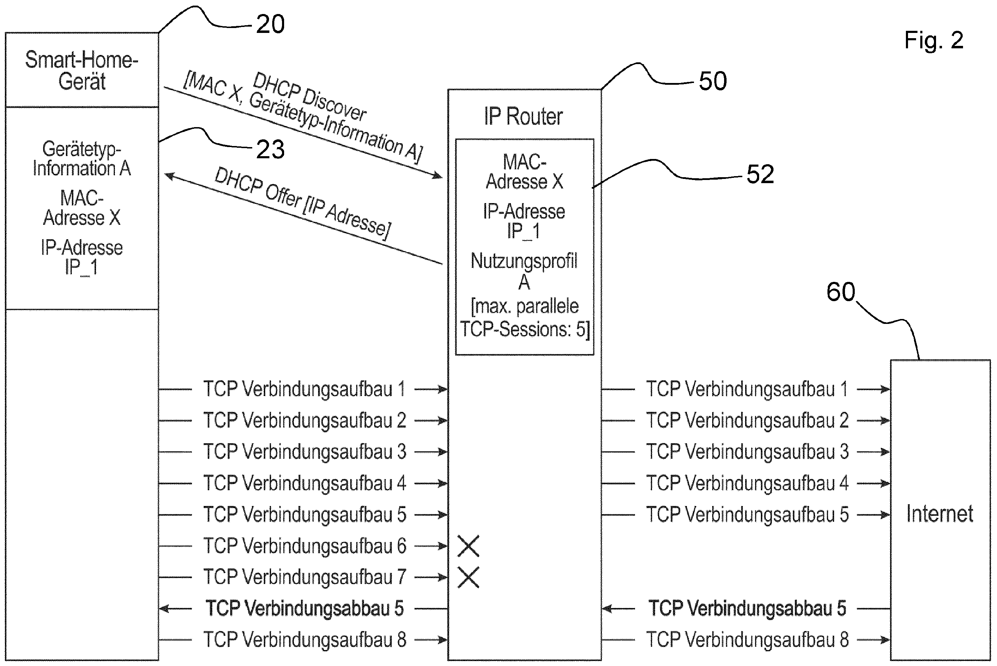

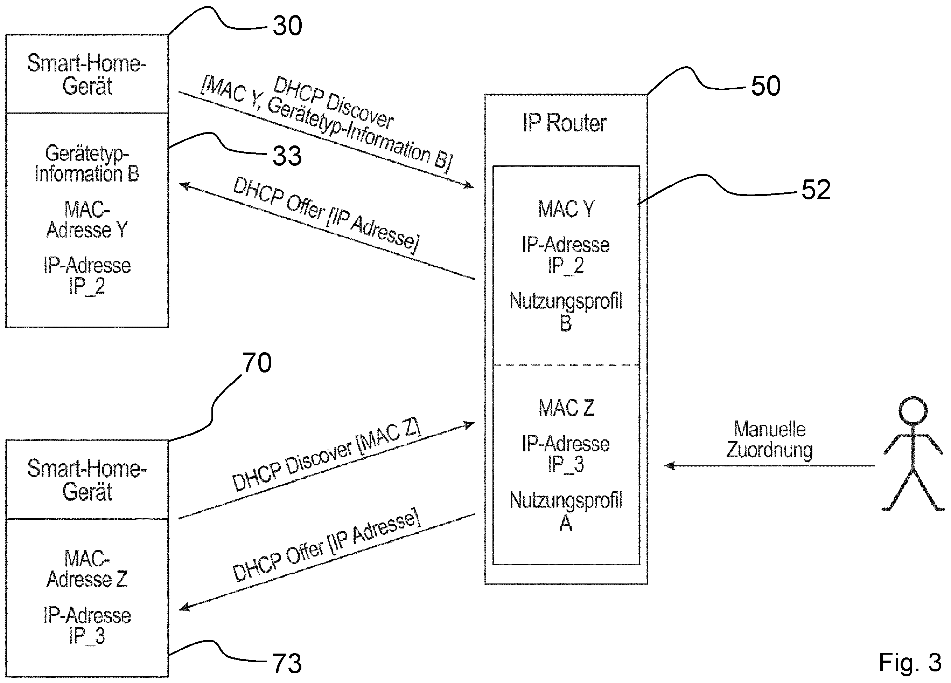

Zunächst wird in Verbindung mit dem Heimnetz-Endgerät 20 beispielhaft erläutert, wie der Heimnetz-Router 50 dem Heimnetz-Endgerät 20 automatisch eine IP-Adresse und eines der in der Speichereinrichtung 52 hinterlegten Heimnetz-Endgerätetyp-abhängigen Datenkommunikations-Nutzungsprofile zuordnet. Angenommen sei, dass in der Speichereinrichtung 52 zumindest das für den Gerätetyp "Rauchmelder" definierte Heimnetz-Endgerätetyp-abhängige Datenkommunikations-Nutzungsprofil A und das für den Gerätetyp "Überwachungskamera" definierte Heimnetz-Endgerätetyp-abhängige Datenkommunikations-Nutzungsprofil B gespeichert sind. Ferner sind, wie oben bereits erwähnt, in dem Heimnetz-Endgerät 20 die MAC-Adresse X und die Gerätetyp-Information A, welche einen Rauchmelder anzeigt, und in dem Heimnetz-Endgerät 30 die MAC-Adresse Y und die Gerätetyp-Information B gespeichert, welche eine Überwachungskamera anzeigt gespeichert. Dies ist in den Figuren 2 und 3 schematisch gezeigt.

Bevor das Heimnetz-Endgerät 20 einen IP-basierten Datenverkehr über den Heimnetz-Router 50 ins Internet 60 übertragen kann, erzeugt das Heimnetz-Endgerät 20 zunächst eine Anforderungsnachricht, zum Beispiel eine DHCP-Discover-Nachricht. Das Heimnetz-Endgerät 20 ist insbesondere dazu ausgebildet, in die DHCP-Discover-Nachricht nicht, wie üblich, die MAC-Adresse X, sondern auch die in der Speichereinrichtung 23 gespeicherte Gerätetyp-Information A einzufügen und über das Heimnetz 40 zum Heimnetz-Router 50 zu übertragen. Denkbar ist, dass eine entsprechende DHCP-Discover-Nachricht automatisch vom Heimnetz-Endgerät 20 nach dem Einschalten erzeugt und übertragen wird. In an sich bekannter Weise ist die Steuereinrichtung 51 des Heimnetz-Routers 50 dazu ausgebildet, den Heimnetz-Router 50 zu veranlassen, dem Heimnetz-Endgerät 20 unter Ansprechen auf die empfangene DHCP-Discover-Nachricht eine IP-Adresse zuzuordnen. Hierzu liest die Steuereinrichtung 51 vorzugsweise die MAC-Adresse X aus der empfangenen DHCP-Discover-Nachricht aus und ordnet der MAC-Adresse X eine der in der Speichereinrichtung 52 gespeicherten IP-Adressen, zum Beispiel die IP-Adresse IP_1 zu. Die Steuereinrichtung 51 des Heimnetz-Routers 50 ist vorzugsweise dazu ausgebildet, als Antwort auf die vom Heimnetz-Endgerät 20 empfangene DHCP-Discover-Nachricht eine sogenannte DHCP-Offer-Nachricht zu erzeugen und diese Nachricht zusammen mit der zuvor der dem Heimnetz-Endgerät 20 zugeordneten IP-Adresse IP_1 zum Heimnetz-Endgerät 20 über das Heimnetz 40 zu übertragen. Die mit der DHCP-Offer-Nachricht empfangene IP-Adresse IP_1 wird dann zum Beispiel in der Speichereinrichtung 23 des Heimnetz-Endgeräts 20 gespeichert und für eine nachfolgende Kommunikation verwendet. Auch dies ist in Figur 2 schematisch dargestellt.

Darüber hinaus ist die Steuereinrichtung 51 dazu ausgebildet, den Heimnetzt-Router 50 zu veranlassen, die Gerätetyp-Information A aus der empfangenen DHCP-Discover-Nachricht auszulesen, die die Angabe enthält, dass das Heimnetz-Endgeräts 20 ein Rauchmelder ist. In Abhängigkeit von der ausgelesen Gerätetyp-Information A veranlasst die Steuereinrichtung 51 den Heimnetz-Router 50, das in der Speichereinrichtung 52 hinterlegte Datenkommunikations-Nutzungsprofil A dem Heimnetz-Endgerät 20 zuzuordnen. Anschließend veranlasst die Steuereinrichtung 51 den Heimnetz-Router 50 dazu, eine Verknüpfungsinformation in der Speichereinrichtung 52 zu speichern, welche die MAC-Adresse X des Heimnetz-Endgeräts 20 und das Datenkommunikations-Nutzungsprofil A sowie vorzugsweise die IP-Adresse IP_1, welche zuvor dem Heimnetz-Endgerät 20 zugeordnet worden sind, miteinander verknüpft. Zudem wird in der Speichereinrichtung 52 des Heimnetz-Routers 50 auch die MAC-Adresse X, die dem Heimnetz- Endgerät 20 zugeordnet ist, gespeichert. Angemerkt sei an dieser Stelle, dass das Heimnetz-Endgerät 20 in der Regel selbst nicht weiß, welches Datenkommunikations-Nutzungsprofil ihm zugeordnet worden ist. Mit anderen Worten: Der Heimnetz-Router 50 überträgt das dem Heimnetz-Endgerät 20 zugeordnete Datenkommunikations-Nutzungsprofil vorzugsweise nicht zum Endgerät 20.

In ähnlicher oder identischer Weise kann der Heimnetz-Router 50 dem Heimnetz-Endgerät 30 automatisch eine IP-Adresse IP_2 und eines der in der Speichereinrichtung 52 hinterlegten Heimnetz-Endgerätetyp-abhängigen Datenkommunikations-Nutzungsprofile, im vorliegenden Beispiel das Datenkommunikations-Nutzungsprofil B zuordnen. Dies ist schematisch in Figur 3 dargestellt.

Bevor das Heimnetz-Endgerät 30 einen IP-basierten Datenverkehr über den Heimnetz-Router 50 ins Internet 60 übertragen kann, erzeugt das Heimnetz-Endgerät 30 zunächst eine Anforderungsnachricht, zum Beispiel eine DHCP-Discover-Nachricht. Das Heimnetz-Endgerät 30 ist insbesondere dazu ausgebildet, in die DHCP-Discover-Nachricht nicht, wie üblich, die MAC-Adresse Y, sondern auch die in der Speichereinrichtung 23 gespeicherte Gerätetyp-Information B einzufügen und über das Heimnetz 40 zum Heimnetz-Router 50 zu übertragen. Denkbar ist, dass eine entsprechende DHCP-Discover-Nachricht automatisch vom Heimnetz-Endgerät 30 nach dem Einschalten erzeugt und übertragen wird. In an sich bekannter Weise ist die Steuereinrichtung 51 des Heimnetz-Routers 50 dazu ausgebildet, den Heimnetz-Router 50 zu veranlassen, dem Heimnetz-Endgerät 30 unter Ansprechen auf die empfangene DHCP-Discover-Nachricht eine IP-Adresse zuzuordnen. Hierzu liest die Steuereinrichtung 51 vorzugsweise die MAC-Adresse Y aus der empfangenen DHCP-Discover-Nachricht aus und ordnet der MAC-Adresse Y eine der in der Speichereinrichtung 52 gespeicherten IP-Adressen, zum Beispiel die IP-Adresse IP_2 zu. Die Steuereinrichtung 51 des Heimnetz-Routers 50 ist vorzugsweise dazu ausgebildet, als Antwort auf die vom Heimnetz-Endgerät 30 empfangene DHCP-Discover-Nachricht eine sogenannte DHCP-Offer-Nachricht zu erzeugen und diese Nachricht zusammen mit der zuvor der dem Heimnetz-Endgerät 30 zugeordneten IP-Adresse IP_2 zum Heimnetz-Endgerät 30 über das Heimnetz 40 zu übertragen. Die mit der DHCP-Offer-Nachricht empfangene IP-Adresse IP_2 wird dann zum Beispiel in der Speichereinrichtung 33 des Heimnetz-Endgeräts 30 gespeichert und für eine nachfolgende Kommunikation verwendet.

Darüber hinaus ist die Steuereinrichtung 51 dazu ausgebildet, den Heimnetzt-Router 50 zu veranlassen, die Gerätetyp-Information B aus der empfangenen DHCP-Discover-Nachricht auszulesen, die die Angabe enthält, dass das Heimnetz-Endgeräts 30 ein Rauchmelder ist. In Abhängigkeit von der ausgelesen Gerätetyp-Information B veranlasst die Steuereinrichtung 51 den Heimnetz-Router 50, das in der Speichereinrichtung 52 hinterlegte Datenkommunikations-Nutzungsprofil B dem Heimnetz-Endgerät 30 zuzuordnen. Anschließend veranlasst die Steuereinrichtung 51 den Heimnetz-Router 50 dazu, eine Verknüpfungsinformation in der Speichereinrichtung 52 zu speichern, welche die MAC-Adresse Y des Heimnetz-Endgeräts 30 und das Datenkommunikations-Nutzungsprofil B sowie vorzugsweise die IP-Adresse IP_2, welche zuvor dem Heimnetz-Endgerät 30 zugeordnet worden sind, miteinander verknüpft. Zudem wird in der Speichereinrichtung 52 des Heimnetz-Routers 50 auch die MAC-Adresse Y, die dem Heimnetz- Endgerät 30 zugeordnet ist, gespeichert. Angemerkt sei an dieser Stelle, dass das Heimnetz-Endgerät 30 in der Regel selbst nicht weiß, welches Datenkommunikations-Nutzungsprofil ihm zugeordnet worden ist. Mit anderen Worten: Der Heimnetz-Router 50 überträgt das dem Heimnetz-Endgerät 30 zugeordnete Datenkommunikations-Nutzungsprofil vorzugsweise nicht zum Endgerät 30.

Angemerkt sei an dieser Stelle, dass die in dem Datenkommunikations-Nutzungsprofile A enthaltene Datenverkehrs-bezogene Information im Heimnetz-Router 50 dazu verwendet wird, den vom Heimnetz-Endgerät 20 ausgehenden IP-basierten Datenverkehr auf den entsprechenden Schwellenwert, nämlich auf fünf parallele TCP-Verbindungen, zu begrenzen. Auf diese Weise kann verhindert werden, dass das Heimnetz-Endgerät sollte es durch einen Angriff in ein Botnetz eingebunden worden sein, für einen begrenzten IP-basierten Datenverkehr ins Internet übertragen kann, um so den Ausfall von Internet-Servern oder die Überlastung von Internet-Zielservern behindern zu können.

Anhand des beispielhaften Datenkommunikations-Nutzungsprofils A, welches wie oben erläutert, durch den Heimnetz-Router 50 dem Heimnetz-Endgerät 20 zugeordnet worden ist, wird die Funktionsweise des Heimnetz-Routers 50, den vom Heimnetz-Endgerät 20 ausgehenden Datenverkehr auf Einhaltung des Datenkommunikations-Nutzungsprofils A zu überprüfen und in Abhängigkeit von dem Ergebnis der ausgeführten Überprüfung zu steuern, bzw. zu begrenzen, näher erläutert.

Nunmehr werde angenommen, dass das Heimnetz-Endgerät 20 bereits den Aufbau von fünf parallelen TCP-Verbindungen über den Heimnetz-Router 50 ins Internet 60 veranlasst hat, wie dies in Figur 2 beispielhaft dargestellt ist. Diesen Kommunikationszustand kann der Heimnetz-Router 50 beispielsweise dadurch überwachen bzw. überprüfen, dass er die Anzahl an TCP SYN-Nachrichten, die vom Heimnetz-Endgerät 20 erzeugt und über den Heimnetz-Router 50 zum Aufbauen von entsprechenden unabhängigen TCP-Verbindungen weitergeleitet worden sind, mitzählt. Am Rande sei angemerkt, dass, solange die Anzahl an TCP-SYN-Nachrichten, welche vom Heimnetz-Endgerät 20 bisher erzeugt worden sind, den in Datenkommunikations-Nutzungsprofil A festgelegten Schwellenwert von 5 unterschreitet, der Heimnetz-Router 50 weitere TCP_SYN-Verbindungsaufbau-Nachrichten durchlässt.

Allerdings sind, wie oben angenommen, bereits fünf parallele TCP-Verbindungen aufgebaut worden. Nunmehr sei weiter angenommen, dass Heimnetz-Endgerät 20, wie in Figur 2 zu sehen ist, zwei weitere TCP SYN-Nachrichten als Verbindungsaufbau-Nachrichten erzeugt und über das Heimnetz 40 zum Heimnetz-Router 50 überträgt. Die Steuereinrichtung 51 ist dazu ausgebildet, zu erkennen, dass bereits fünf parallele TCP-Verbindungen vom Heimnetz-Endgerät 20 aufgebaut und aktuell noch im Betrieb sind. Unter Ansprechen auf das dem Heimnetz-Endgerät 20 zugeordnete Datenkommunikations-Nutzungsprofil A und die beiden weiteren Verbindungsaufbau-Nachrichten blockiert der Heimnetz-Router 50 alle weiteren Verbindungsaufbau-Nachrichten, die den definierten Schwellenwert von 5 überschreiten. Erst wenn wenigstens eine der fünf bestehenden TCP-Verbindung beispielsweise vom Endgerät 20 wieder abgebaut werden, können neue Verbindungsaufbau-Nachrichten, also TCP SYN-Nachrichten vom Heimnetz-Endgerät 20 erzeugt werden, die der Heimnetz-Router 50 durchlässt. Dieses Kommunikationsverhalten ist ebenfalls schematisch in Figur 2 zu sehen, wobei beispielsweise die TCP-Verbindung 5 abgebaut wird und folglich eine weitere TCP-Verbindung 8 aufgebaut werden kann. Auf diese Weise kann zum Beispiel verhindert werden, dass das Heimnetz-Endgerät 20 infolge eines DDoS Angriffs das Internet 60 mit Daten über eine große Anzahl paralleler TCP-Verbindungen unkontrolliert überfluten kann.

Nunmehr wird anhand des beispielhaften Datenkommunikations-Nutzungsprofils B, welches wie oben erläutert, durch den Heimnetz-Router 50 dem Heimnetz-Endgerät 30 zugeordnet worden ist, die Funktionsweise des Heimnetz-Routers 50, den vom Heimnetz-Endgerät 30 ausgehenden Datenverkehr auf Einhaltung des Datenkommunikations-Nutzungsprofils B zu überprüfen und in Abhängigkeit von dem Ergebnis der ausgeführten Überprüfung zu steuern, bzw. zu begrenzen, näher erläutert.

Wie weiter oben bereits erläutert, enthält das dem Gerätetyp "Überwachungskamera" und damit dem Heimnetz-Endgerät 30 zugeordnete Datenkommunikations-Nutzungsprofil B beispielsweise eine Datenverkehrs-Information, welche die maximale Datenrate enthält, mit der das Heimnetz-Endgerät 30, also eine Überwachungskamera, IP-Pakete übertragen darf. Bei dem hier betrachteten Beispiel beträgt die maximale Datenrate 10 Mbps.

Angenommen sei nunmehr, dass das Heimnetz-Endgerät 30 einen ausgehenden, IP-Pakete umfassenden Datenstrom erzeugt, wobei jedes IP-Paket des Datenstroms die dem Heimnetz-Endgerät 30 zuvor vom Heimnetz-Router 50 zugeordnete IP-Adresse IP_2 und die MAC-Adresse Y enthält. Der Heimnetz-Router 50 ist dazu ausgebildet, den vom Heimnetz-Endgerät 30 ausgehenden Datenverkehr zu empfangen und anhand der darin enthaltenen IP-Pakete die Einhaltung des dem Heimnetz-Endgeräts 30 zugeordneten Datenkommunikations-Nutzungsprofils B zu überprüfen und in Abhängigkeit von dem Ergebnis der ausgeführten Überprüfung den vom Heimnetz-Endgerät 30 ausgehenden Datenverkehr zu steuern bzw. zu begrenzen. Vorteilhafterweise ist die Steuereinrichtung 51 dazu ausgebildet, den Heimnetz-Router 50 zu veranlassen, die Datenrate des vom Heimnetz-Endgerät 30 ausgehenden Datenverkehrs zu überwachen bzw. auf Einhaltung der vorgegebenen Datenrate zu überprüfen, indem beispielsweise die Anzahl an IP-Pakete des ausgehenden Datenverkehrs pro Zeiteinheit gezählt werden. Da die Anzahl der in einem IP-Paket enthaltenen Bits bekannt ist, kann die Steuereinrichtung 51 die Datenrate überwachen. Stellt die Steuereinrichtung 51 fest, dass die in dem Datenkommunikations-Nutzungsprofil B festgelegt Datenrate von beispielsweise 10Mbps durch das Heimnetz-Endgerät 30 überschritten wird, begrenzt der Heimnetz-Router 50 automatisch den vom Heimnetz-Endgerät 30 ausgehenden Datenverkehr auf die zulässige Datenrate. Auf diese Weise kann zum Beispiel verhindert werden, dass das Heimnetz-Endgerät 30 infolge eines DDoS Angriffs das Internet 60 mit Daten unkontrolliert überflutet.

Da beispielsweise das Datenkommunikations-Nutzungsprofil B, welches dem Heimnetz-Endgerät 30 zugeordnet worden ist, als weitere Datenverkehrs-Information wenigstens ein zu verwendendes Kommunikationsprotokoll enthält, im vorliegenden Beispiel sind das die Kommunikationsprotokolle TCP und UDP, ist die Steuereinrichtung 51 des Heimnetz-Routers 50 ferner dazu ausgebildet, anhand der IP-Pakete, welche in dem vom Heimnetz-Endgerät 30 ausgehenden Datenverkehr enthaltenen sind, zu überprüfen, ob ein zulässiges Kommunikationsprotokoll verwendet wird. Dies ist deshalb möglich, da in den IP-Paketen in der Regel auch die vom Heimnetz-Endgerät 30 verwendeten Kommunikationsprotokolle enthalten sind.

Denkbar in diesem Zusammenhang ein DDoS-Angriff auf das Heimnetz-Endgerät 30, durch den das Heimnetz-Endgerät 30 veranlasst wird, Anforderungsnachrichten gemäß dem Post Office Protocol (POP) zu einem bestimmten E-Mail-Server zu übertragen, um angebliche E-Mails von dort abzuholen. Aufgrund dieses Angriffs würde das Heimnetz-Endgerät 30 beispielsweise veranlasst werden, eine große Anzahl derartiger POP-Anforderungsnachrichten zum E-Mail-Server zu übertragen, sodass dieser legitime POP-basierte Anforderungsnachrichten nicht mehr verarbeiten kann. Dank der Erfindung ist jedoch der Heimnetz-Router 50 in der Lage, anhand des dem Heimnetz-Endgerät 30 zugeordneten Datenkommunikations-Nutzungsprofil B die vom Heimnetz-Endgerät 30 ausgehenden IP-Pakete daraufhin zu überprüfen, ob diese entsprechend einem zugelassenen Kommunikationsprotokoll erzeugt worden sind. Ist dies nicht der Fall, so verhindert der Heimnetz-Router 50 die Weiterleitung dieser vom Heimnetz-Endgerät 30 erzeugten IP-Pakete, wodurch ein Ausfall oder eine Überlastung des jeweiligen E-Mail-Servers verhindert werden kann.

Nunmehr wird noch ein beispielhafter Fall betrachtet, bei dem ein Heimnetz-Endgerät, beispielsweise das Heimnetz-Endgerät 70, nicht dazu ausgebildet ist, eine Gerätetyp-Information zu speichern und diese in einer Anforderungs-Nachricht, insbesondere in einer DHCP-Discover-Nachricht zum Heimnetz-Router50 zu übertragen. Damit dennoch der Heimnetz-Router 50 einen vom Heimnetz-Endgerät 70 ausgehenden Datenverkehr Überwachen und gegebenenfalls begrenzen kann, muss ein Nutzer des Heimnetzes 40 am Heimnetz-Router 50 manuell dem Heimnetz-Endgerät 70 ein Heimnetz-Endgerätetyp-abhängiges Datenkommunikations-Nutzungsprofil, im vorliegenden Beispiel das Datenkommunikations-Nutzungsprofil A, zuordnen.

Ein beispielhaftes Szenario sieht dazu vor, dass nach dem Einschalten das Heimnetz-Endgerät 70 beispielsweise eine DHCP-Discover-Nachricht erzeugt und in dieser DHCP-Discover-Nachricht die der Kommunikationsschnittstelle 72 zugeordnete MAC-Adresse Z zum Heimnetz-Router 50 überträgt. Der Heimnetz-Router 50 ist dazu ausgebildet, in an sich bekannter Weise unter Ansprechen auf die empfangene DHCP-Discover-Nachricht dem Heimnetz-Endgerät 70 eine IP-Adresse, zum Beispiel die IP-Adresse IP_3 zuzuordnen und diese Adresse in einer DHCP-Offer-Nachricht über das Heimnetz 40 zum Heimnetz-Endgerät 70 zu übertragen. Ferner sei angenommen, dass der Benutzer nunmehr in dem Heimnetz-Router 50 manuell dem Heimnetz-Endgerät 70 das Datenkommunikations-Nutzungsprofil A zuordnet, indem der Benutzer zum Beispiel eine Verknüpfungsinformation am Heimnetz-Router 50 eingibt, die eine Verknüpfung zwischen der MAC-Adresse Z und dem Datenkommunikations-Nutzungsprofil A und gegebenenfalls mit der IP-Adresse IP_3 herstellt. Der Heimnetz-Router 50 speichert dann die MAC-Adresse Z des Heimnetz-Endgeräts 70 in der Speichereinrichtung 52 zusammen mit der vom Benutzer erstellten Verknüpfungsinformation. Auf diese Weise wird der Heimnetz-Router 50 in die Lage versetzt, vom Heimnetz-Endgerät 70 ausgehende IP-Pakete, welche neben der IP-Adresse IP_3 auch die MAC-Adresse Z enthalten, auf Einhaltung des Datenkommunikations-Nutzungsprofils A zu überprüfen, welches zuvor manuell dem Heimnetz-Endgerät 50 in dem Heimnetz-Router 50 zugeordnet worden ist. Diese Schritte sind schematisch in Figur 3 zu sehen. Auf diese Weise kann der Heimnetz-Router 50 in der zuvor erläuterten Weise verhindern, dass das Heimnetz-Endgerät 70 infolge einer DDoS-Attacke zum Beispiel das Internet 60 mit Daten unkontrolliert überfluten kann.

Nachfolgend werden zumindest einige der beispielhaften Aspekte noch einmal zusammengefasst.

Gemäß einem beispielhaften Aspekt wird ein Verfahren zur Verfügung gestellt wird, welches beispielsweise zum Überprüfen und Steuern eines von einem IP-fähigen Heimnetz-Endgerät 20 ausgehendenden, IP-Pakete enthaltenden Datenverkehrs angewendet werden kann, wobei das Heimnetz-Endgerät 20 über ein Heimnetz 40 mit einem IP-fähigen Heimnetz-Router 50, welcher eine Schnittstelle 53 zur Kommunikation mit einem externen IP-Kommunikationsnetz 60, 80 aufweist, verbindbar ist. Das Verfahren kann beispielsweise zumindest einige der folgenden Verfahrensschritte aufweisen:
a) Speichern, in dem IP-fähigen Heimnetz-Router (50), mehrerer Heimnetz-Endgerätetyp-abhängiger Datenkommunikations-Nutzungsprofile;
b) Speichern, in dem Heimnetz-Endgerät 20, einer Gerätetyp-Information und einer MAC-Adresse, welche dem Heimnetz-Endgerät 20 zugeordnet sind;
c) Übertragen, von dem Heimnetz-Endgerät 20, unter Verwendung eines Kommunikationsprotokolls zur automatischen Zuweisung von Netzwerkkonfigurationsdaten einer Anforderungsnachricht über das Heimnetz 40 zu dem IP-fähigen Heimnetz-Router 50, wobei die Anforderungsnachricht die in Schritt b) gespeicherte MAC-Adresse und Gerätetyp-Information enthält;
d) Zuordnen, durch den Heimnetz-Router 50, dem Heimnetz-Endgerät 20 unter Ansprechen auf die empfangene Anforderungsnachricht einer IP-Adresse und, in Abhängigkeit von der Gerätetyp-Information, eines der in Schritt a) gespeicherten Datenkommunikations-Nutzungsprofile;
e) Speichern, in dem Heimnetz-Router (50), der MAC-Adresse des Heimnetz-Endgeräts 20 und eine Zuordnungsinformation, welche das Datenkommunikations-Nutzungsprofil, welche in Schritt d) dem Heimnetz-Endgerät 20 zugeordnet worden sind, mit der MAC-Adresse des Heimnetz-Endgerätes 20 verknüpft;
f) Übertragen, vom Heimnetz-Router 50, der in Schritt d) dem Heimnetz-Endgerät zugeordneten IP-Adresse zum Heimnetz-Endgerät 20;
g) Übertragen von IP-Paketen vom Heimnetz-Endgerät 20 zum Heimnetz-Router 50;
h) Überprüfen, durch den Heimnetz-Router 50, des vom Heimnetz-Endgerät 20 ausgehenden Datenverkehrs anhand der in Schritt g) empfangenen IP-Pakete auf Einhaltung des in Schritt d) dem Heimnetz-Endgerät 20 zugeordneten Datenkommunikations-Nutzungsprofils; und
i) Steuern, durch den Heimnetz-Router 50, des vom Heimnetz-Endgerät 20 ausgehenden Datenverkehrs in Abhängigkeit von dem Ergebnis der in Schritt h) ausgeführten Überprüfung.

Angemerkt sei, dass unter einem von einem IP-fähigen Heimnetz-Endgerät ausgehenden Datenverkehr insbesondere ein Datenverkehr verstanden werden kann, der vorzugsweise zumindest für einen über ein externes IP-Kommunikationsnetz erreichbaren Server bestimmt ist. Der Datenverkehr enthält vorzugsweise IP-Pakete, die Steuer- oder Nutzdaten enthalten können.

Vorteilhafterweise können die in Schritt a) gespeicherten Heimnetz-Endgerätetyp-abhängigen Datenkommunikations-Nutzungsprofile jeweils wenigstens eine Datenverkehrs-bezogene Information enthalten, die einen Schwellenwert festlegen können, wobei
Schritt i) das Begrenzen des vom Heimnetz-Endgerät 20 ausgehenden Datenverkehrs auf den jeweiligen Schwellenwert durch den Heimnetz-Router 50 für den Fall enthält, dass der aktuelle Datenverkehr den Schwellenwert überschreitet.

Vorteilhafterweise kann zumindest eines der die in Schritt a) gespeicherten Heimnetz-Endgerätetyp-abhängigen Datenkommunikations-Nutzungsprofile als eine erste Datenverkehrs-bezogene Information die maximale Anzahl von TCP-Kommunikationsverbindungen, die gleichzeitig von einem Heimnetz-Endgerät des entsprechenden Gerätetyps aufgebaut werden dürfen, enthalten, wobei in Schritt i) mithilfe des Heimnetz-Routers 50 der Aufbau einer weiteren TCP-Kommunikationsverbindung durch das Heimnetz-Endgerät 20 verhindert wird, wenn in Schritt h) festgestellt worden ist, dass die maximale Anzahl von parallelen TCP-Kommunikationsverbindungen, die in dem in Schritt d) dem Heimnetz-Endgerät 20 zugeordneten Datenkommunikations-Nutzungsprofil festgelegt worden ist, vom Heimnetz-Endgerät 20 bereits aufgebaut worden sind und vom Heimnetz-Endgerät 20 der Aufbau von wenigstens einer weiteren TCP-Kommunikationsverbindung eingeleitet worden ist. Der letzte Schritt, dass vom Heimnetz-Endgerät 20 der Aufbau von wenigstens einer weiteren TCP-Kommunikationsverbindung eingeleitet worden ist, ist insbesondere dahingehend zu verstehen, dass das Heimnetz-Endgerät wenigstens eine weitere Verbindungsaufbau-Anforderungsnachricht erzeugt und zum Heimnetz-Router übertragen hat. Allerdings wird diese Verbindungsaufbau-Anforderungsnachricht vom Heimnetz-Router verworfen bzw. nicht mehr weitergeleitet.

Vorteilhafterweise kann zumindest eines der in Schritt a) gespeicherten Heimnetz-Endgerätetyp-abhängigen Datenkommunikations-Nutzungsprofil als eine zweite Datenverkehrs-bezogene Information die maximale Datenrate enthalten, mit welcher ein Heimnetz-Endgerät des jeweiligen Gerätetyps IP-Pakete übertragen darf, wobei in Schritt i) mithilfe des Heimnetz-Routers 50 die Weiterleitung des vom Heimnetz-Endgerät 20 ausgehenden Datenverkehrs beendet oder die aktuelle Datenrate zur Weiterleitung des vom Heimnetz-Endgerät 20 ausgehenden Datenverkehrs auf die maximale Datenrate, die in dem in Schritt d) dem Heimnetz-Endgerät 20 zugeordneten Datenkommunikations-Nutzungsprofil festgelegt worden ist, begrenzt wird, wenn in Schritt h) festgestellt worden ist, dass die maximale Datenrate, die in dem in Schritt d) dem Heimnetz-Endgerät 20 zugeordneten Datenkommunikations-Nutzungsprofil festgelegt worden ist, vom Heimnetz-Endgerät 20 überschritten worden ist.

Vorteilhafterweise kann zumindest eines der in Schritt a) gespeicherten Heimnetz-Endgerätetyp-abhängigen Datenkommunikations-Nutzungsprofile als eine dritte Datenverkehrs-bezogene Information wenigstens ein zu verwendendes Kommunikationsprotokoll enthalten, wobei in Schritt i) mithilfe des Heimnetz-Routers 50 die Weiterleitung des vom Heimnetz-Endgerät 20 ausgehenden Datenverkehrs beendet oder verhindert wird, wenn in Schritt h) festgestellt worden ist, dass das vom Heimnetz-Endgerät 20 verwendete Kommunikationsprotokoll nicht mit dem Kommunikationsprotokoll, welches in dem in Schritt d) dem Heimnetz-Endgerät 20 zugeordneten Datenkommunikations-Nutzungsprofil enthalten ist, übereinstimmt.

Vorteilhafterweise kann als Kommunikationsprotokoll zur automatischen Zuweisung von Netzwerkkonfigurationsdaten das Dynamic Host Configuration Protocol (DHCP) verwendet werden, wobei
die in Schritt c) übertragene Anforderungsnachricht eine DHCP-Discover-Nachricht ist, und wobei
in Schritt f) die IP-Adresse in einer DHCP-Offer-Nachricht zum Heimnetz-Endgerät 20 bzw. 30 übertragen wird.

Vorteilhafterweise können zumindest einige der die in Schritt g) vom Heimnetz-Endgerät 20 übertragenen IP-Pakete jeweils eine Anforderungs-Nachricht, insbesondere eine HTTP GET Nachricht oder eine TCP SYN Verbindungsaufbau-Nachricht enthalten, wobei
die in Schritt a) gespeicherten Heimnetz-Endgerätetyp-abhängigen Datenkommunikations-Nutzungsprofile als eine vierte Datenverkehrs-bezogene Information jeweils die maximale Anzahl an Anforderungs-Nachrichten enthalten, welche ein Heimnetz-Endgerät des jeweiligen Gerätetyps gleichzeitig oder während einer vorbestimmten Zeitspanne übertragen darf, wobei
in Schritt i) mithilfe des Heimnetz-Routers 50 die Weiterleitung eines vom Heimnetz-Endgerät 20 ausgehenden IP-Paktes, welches eine Anforderungs-Nachricht enthält, verhindert wird, wenn in Schritt h) festgestellt worden ist, dass die maximale Anzahl an Anforderungs-Nachrichten, welche in dem in Schritt d) dem Heimnetz-Endgerät 20 zugeordneten Datenkommunikations-Nutzungsprofil enthalten ist, überschritten werden.

Zweckmäßigerweise können die Schritte b) bis i) für wenigstens ein weiteres Heimnetz-Endgerät 30 wiederholt werden.

Gemäß einem weiteren vorteilhaften Aspekt wird ein Kommunikationssystem 10 geschaffen, welches zumindest einige der folgenden Merkmale aufweisen kann:
- ein Heimnetz 40,
- wenigstens ein IP-fähiges Heimnetz-Endgerät 20, 30, welches eine Speichereinrichtung 23 bzw. 33, in der eine Gerätetyp-Information und ein Kommunikationsprotokolls zur automatischen Zuweisung von Netzwerkkonfigurationsdaten gespeichert sind, und eine Steuereinrichtung 21 bzw.31 aufweisen kann, wobei dem wenigstens einen IP-fähigen Heimnetz-Endgerät 20, 30 eine MAC-Adresse eindeutig zugeordnet ist, und
- wenigstens einen IP-fähigen Heimnetz-Router 50, welcher eine Speichereinrichtung 52, eine Steuereinrichtung 51 und eine Schnittstelle 53 zur Kommunikation mit einem externen IP-Kommunikationsnetz 60 und/oder, 80, aufweist, wobei in der Speichereinrichtung 52 des Heimnetz-Routers 50 mehrerer Heimnetz-Endgerätetyp-abhängige Datenkommunikations-Nutzungsprofile gespeichert sind, wobei das Heimnetz-Endgerät 20, 30 und der Heimnetz-Router 50 jeweils zur Kommunikation über das Heimnetz 40 ausgebildet sind, wobei
   die Steuereinrichtung 21, 31 des Heimnetz-Endgeräts 20 bzw. 30 dazu ausgebildet ist, unter Verwendung des Kommunikationsprotokolls zur automatischen Zuweisung von Netzwerkkonfigurationsdaten das Heimnetz-Endgerät 20, 30 zu veranlassen, eine Anforderungsnachricht über das Heimnetz 40 zum IP-fähigen Heimnetz-Router 50 zu übertragen, wobei die Anforderungsnachricht die dem Heimnetz-Endgerät 20, 30 zugeordnete MAC-Adresse und Gerätetyp-Information enthält, wobei
   die Steuereinrichtung 51 des Heimnetz-Routers 50 dazu ausgebildet sein kann, den Heimnetz-Router 50 zu veranlassen,
- dem wenigstens einen Heimnetz-Endgerät 20, 30 unter Ansprechen auf die empfangene Anforderungsnachricht eine IP-Adresse und, in Abhängigkeit von der Gerätetyp-Information, eines der gespeicherten Datenkommunikations-Nutzungsprofile zuzuordnen,
- in der Speichereinrichtung 52 des Heimnetz-Router 50 die MAC-Adresse und eine Verknüpfung zwischen der MAC-Adresse des Heimnetz-Endgeräts 20, 30 und dem Datenkommunikations-Nutzungsprofil, welche dem Heimnetz-Endgerät (20, 30) zugeordnet worden sind, und gegebenenfalls der dem Heimnetz-Endgerät 20, 30 zugewiesenen IP-Adresse zu speichern, und
   die dem Heimnetz-Endgerät 20, 30 zugeordnete IP-Adresse zum Heimnetz-Endgerät 20, 30 zu übertragen, wobei
   das Heimnetz-Endgerät 20, 30 ferner dazu ausgebildet sein kann, einen ausgehenden, IP-Pakete enthaltenden Datenverkehr zum Heimnetz-Router 50 zu übertragen, wobei der Heimnetz-Router 50 ferner dazu ausgebildet sein kann,
   den vom Heimnetz-Endgerät 20, 30 ausgehenden Datenverkehr zu empfangen und anhand der darin enthaltenen IP-Pakete auf Einhaltung des dem Heimnetz-Endgerät 20, 30 zugeordneten Datenkommunikations-Nutzungsprofils zu überprüfen, und den vom Heimnetz-Endgerät 20, 30 ausgehenden Datenverkehr in Abhängigkeit von dem Ergebnis der ausgeführten Überprüfung zu steuern.

Vorteilhafterweise können die in der Speichereinrichtung 52 des Heimnetz-Routers 50 gespeicherten Heimnetz-Endgerätetyp-abhängigen Datenkommunikations-Nutzungsprofile jeweils wenigstens eine Datenverkehrs-bezogene Information enthalten, die einen Schwellenwert festlegt, wobei
der Heimnetz-Router 50 dazu ausgebildet sein kann, den vom Heimnetz-Endgerät 20, 30 ausgehenden Datenverkehr auf den jeweiligen Schwellenwert zu begrenzen, falls dieser überschritten wird.

Vorteilhafterweise können die in der Speichereinrichtung 52 des Heimnetz-Routers 50 gespeicherten Heimnetz-Endgerätetyp-abhängigen Datenkommunikations-Nutzungsprofile als eine erste Datenverkehrs-Information jeweils die maximale Anzahl von TCP-Kommunikationsverbindungen, die gleichzeitig von einem Heimnetz-Endgerät des jeweiligen Gerätetyps aufgebaut werden dürfen, enthalten, wobei
der Heimnetz-Router 50 dazu ausgebildet sein kann, den Aufbau einer weiteren TCP-Kommunikationsverbindung durch das Heimnetz-Endgerät 20, 30 zu verhindern, wenn der Heimnetz-Router 50 bei der Überprüfung des Datenverkehrs auf Einhaltung des dem Heimnetz-Endgerät 20, 30 zugeordneten Datenkommunikations-Nutzungsprofils anhand der im Datenverkehr enthaltenen IP-Pakete festgestellt hat, dass die maximale Anzahl von parallelen TCP-Kommunikationsverbindungen, die in dem, dem Heimnetz-Endgerät 20, 30 zugeordneten Datenkommunikations-Nutzungsprofil festgelegt worden ist, vom Heimnetz-Endgerät 20, 30 bereits aufgebaut worden sind und vom Heimnetz-Endgerät 20, 30 der Aufbau von wenigstens einer weiteren TCP-Kommunikationsverbindung eingeleitet worden ist.

Vorteilhafterweise können die in der Speichereinrichtung 52 des Heimnetz-Routers 50 gespeicherten Heimnetz-Endgerätetyp-abhängigen Datenkommunikations-Nutzungsprofil als eine zweite Datenverkehrs-Information jeweils die maximale Datenrate enthalten, mit der ein Heimnetz-Endgerät des jeweiligen Gerätetyps IP-Pakete übertragen darf, wobei
der Heimnetz-Router 50 dazu ausgebildet sein kann, die Weiterleitung des vom Heimnetz-Endgerät 20, 30 ausgehenden Datenverkehrs zu beenden oder die aktuelle Datenrate zur Weiterleitung des vom Heimnetz-Endgerät 20, 30 ausgehenden Datenverkehrs auf die maximale Datenrate, die in dem, dem Heimnetz-Endgerät 20, 30 zugeordneten Datenkommunikations-Nutzungsprofil festgelegt worden ist, zu begrenzen bzw. zu reduzieren, wenn der Heimnetz-Router 50 bei der Überprüfung des Datenverkehrs auf Einhaltung des dem Heimnetz-Endgerät 20, 30 zugeordneten Datenkommunikations-Nutzungsprofils anhand der im Datenverkehr enthaltenen IP-Pakete festgestellt hat, dass die maximale Datenrate, die in dem dem Heimnetz-Endgerät 20, 30 zugeordneten Datenkommunikations-Nutzungsprofil festgelegt worden ist, vom Heimnetz-Endgerät 20, 30 überschritten wird.

Vorteilhafterweise können die in der Speichereinrichtung 52 des Heimnetz-Routers 50 gespeicherten Heimnetz-Endgerätetyp-abhängigen Datenkommunikations-Nutzungsprofil als eine dritte Datenverkehrs-Information wenigstens ein zu verwendendes Kommunikationsprotokoll enthalten, wobei
der Heimnetz-Router 50 dazu ausgebildet sein kann, die Weiterleitung des vom Heimnetz-Endgerät (20, 30) ausgehenden Datenverkehrs zu beenden oder zu verhindern, wenn der Heimnetz-Router 50 bei der Überprüfung des Datenverkehrs auf Einhaltung des dem Heimnetz-Endgerät 20, 30 zugeordneten Datenkommunikations-Nutzungsprofils anhand der im Datenverkehr enthaltenen IP-Pakete festgestellt hat, dass das vom Heimnetz-Endgerät 20, 30 verwendete Kommunikationsprotokoll nicht mit dem Kommunikationsprotokoll, welches in dem, dem Heimnetz-Endgerät 20, 30 zugeordneten Datenkommunikations-Nutzungsprofil enthalten ist, übereinstimmt.

Vorteilhafterweise können das Heimnetz-Endgerät 20, 30 und der Heimnetz-Router 50 jeweils dazu ausgebildet sind, als Kommunikationsprotokoll zur automatischen Zuweisung von Netzwerkkonfigurationsdaten das Dynamic Host Configuration Protocol (DHCP) auszuführen, wobei
das Heimnetz-Gerät 20, 30 dazu ausgebildet sein kann, als Anforderungsnachricht eine DHCP-Discover-Nachricht zu erzeugen und die gespeicherte Gerätetyp-Information in die DHCP-Discover-Nachricht einzufügen, wobei
der Heimnetz-Router 50 dazu ausgebildet sein kann, die dem Heimnetz-Endgerät 20, 30 zugeordnete IP-Adresse in einer DHCP-Offer-Nachricht zum Heimnetz-Endgerät 20, 30) zu übertragen.

Zweckmäßigerweise kann das Heimnetz-Endgerät 20, 30 dazu ausgebildet sein, einen ausgehenden Datenverkehr zu erzeugen, der IP-Pakete aufweisen kann, in denen jeweils eine Anforderungs-Nachricht, insbesondere eine HTTP GET Nachrichten oder TCP SYN Verbindungsaufbau-Nachrichten enthalten sind, wobei
wenigstens eines der in der Speichereinrichtung 52 des Heimnetz-Routers 50 gespeicherten Heimnetz-Endgerätetyp-abhängigen Datenkommunikations-Nutzungsprofile als eine vierte Datenverkehrs-bezogene Information die maximale Anzahl an Anforderungs-Nachrichten enthält, welche ein Heimnetz-Endgerät 20, 30 des jeweiligen Gerätetyps gleichzeitig oder während einer vorbestimmten Zeitspanne übertragen darf, wobei
der Heimnetz-Router 50 dazu ausgebildet sein kann, die Weiterleitung eines vom Heimnetz-Endgerät 20, 30 ausgehenden IP-Paktes, welches eine Anforderungs-Nachricht enthält, zu verhindern, wenn der Heimnetz-Router 50 festgestellt hat, dass die maximale Anzahl an Anforderungs-Nachrichten, welche in dem, dem Heimnetz-Endgerät (20, 30) zugeordneten Datenkommunikations-Nutzungsprofil enthalten ist, vom Heimnetz-Endgerät 20, 30 überschritten wurden.

Angemerkt sei, dass auch jedes in der Speichereinrichtung 52 des Heimnetz-Routers 50 gespeicherte Heimnetz-Endgerätetyp-abhängigen Datenkommunikations-Nutzungsprofil eine entsprechende Gerätetyp-abhängige erste, und/oder zweite, und/oder dritte und/oder vierte Datenverkehrs-bezogene Information enthalten kann.

## Patentansprüche

1. Verfahren zum Überprüfen und Steuern eines von einem IP-fähigen Heimnetz-Endgerät (20) ausgehendenden, IP-Pakete enthaltenden Datenverkehrs, wobei das Heimnetz-Endgerät (20) über ein Heimnetz (40) mit einem IP-fähigen Heimnetz-Router (50), welcher eine Schnittstelle (53) zur Kommunikation mit einem externen IP-Kommunikationsnetz (60, 80) aufweist, verbindbar ist, mit folgenden Verfahrensschritten:
a) Speichern, in dem IP-fähigen Heimnetz-Router (50), mehrerer Heimnetz-Endgerätetyp-abhängiger Datenkommunikations-Nutzungsprofile;
b) Speichern, in dem IP-fähigen Heimnetz-Endgerät (20), einer Gerätetyp-Information und einer MAC-Adresse, welche dem Heimnetz-Endgerät (20) zugeordnet sind;
c) Übertragen, von dem Heimnetz-Endgerät (20), unter Verwendung eines Kommunikationsprotokolls zur automatischen Zuweisung von Netzwerkkonfigurationsdaten einer Anforderungsnachricht über das Heimnetz (40) zu dem IP-fähigen Heimnetz-Router (50), wobei die Anforderungsnachricht die in Schritt b) gespeicherte MAC-Adresse und Gerätetyp-Information enthält;
d) Zuordnen, durch den Heimnetz-Router (50), dem Heimnetz-Endgerät (20) unter Ansprechen auf die empfangene Anforderungsnachricht einer IP-Adresse und, in Abhängigkeit von der Gerätetyp-Information, eines der in Schritt a) gespeicherten Datenkommunikations-Nutzungsprofile;
e) Speichern, in dem Heimnetz-Router (50), der MAC-Adresse des Heimnetz-Endgeräts (20) und eine Zuordnungsinformation, welche das Datenkommunikations-Nutzungsprofil, welche in Schritt d) dem Heimnetz-Endgerät (20) zugeordnet worden sind, mit der MAC-Adresse des Heimnetz-Endgerätes (20) verknüpft;
f) Übertragen, vom Heimnetz-Router (50, der in Schritt d) dem Heimnetz-Endgerät zugeordneten IP-Adresse zum Heimnetz-Endgerät (20);
g) Übertragen von IP-Paketen vom Heimnetz-Endgerät (20) zum Heimnetz-Router (50);
h) Überprüfen, durch den Heimnetz-Router (50), des vom Heimnetz-Endgerät (20) ausgehenden Datenverkehrs anhand der in Schritt g) empfangenen IP-Pakete auf Einhaltung des in Schritt d) dem Heimnetz-Endgerät (20) zugeordneten Datenkommunikations-Nutzungsprofils; und
i) Steuern, durch den Heimnetz-Router (50), des vom Heimnetz-Endgerät (20) ausgehenden Datenverkehrs in Abhängigkeit von dem Ergebnis der in Schritt h) ausgeführten Überprüfung.

2. Verfahren nach Anspruch 1,
**dadurch gekennzeichnet, dass**
die in Schritt a) gespeicherten Heimnetz-Endgerätetyp-abhängigen Datenkommunikations-Nutzungsprofile jeweils wenigstens eine Datenverkehrs-bezogene Information enthalten, die einen Schwellenwert festlegt, und dass Schritt i) das Begrenzen des vom Heimnetz-Endgerät (20) ausgehenden Datenverkehrs auf den jeweiligen Schwellenwert durch den Heimnetz-Router (50) enthält.

3. Verfahren nach Anspruch 2,
**dadurch gekennzeichnet, dass**
wenigstens eines der in Schritt a) gespeicherten Heimnetz-Endgerätetyp-abhängigen Datenkommunikations-Nutzungsprofile als eine erste Datenverkehrs-bezogene Information die maximale Anzahl von TCP-Kommunikationsverbindungen, die gleichzeitig von einem Heimnetz-Endgerät des jeweiligen Gerätetyps aufgebaut werden dürfen, enthält, und dass in Schritt i) mithilfe des Heimnetz-Routers (50) der Aufbau einer weiteren TCP-Kommunikationsverbindung durch das Heimnetz-Endgerät (20) verhindert wird, wenn in Schritt h) festgestellt worden ist, dass die maximale Anzahl von parallelen TCP-Kommunikationsverbindungen, die in dem in Schritt d) dem Heimnetz-Endgerät zugeordneten Datenkommunikations-Nutzungsprofil festgelegt worden ist, vom Heimnetz-Endgerät (20) bereits aufgebaut worden sind und vom Heimnetz-Endgerät (20) der Aufbau von wenigstens einer weiteren TCP-Kommunikationsverbindung eingeleitet worden ist.

4. Verfahren nach Anspruch 2 oder 3,
**dadurch gekennzeichnet, dass**
wenigstens eines der in Schritt a) gespeicherten Heimnetz-Endgerätetyp-abhängigen Datenkommunikations-Nutzungsprofile als eine zweite Datenverkehrs-bezogene Information die maximale Datenrate enthält, mit welcher ein Heimnetz-Endgerät des jeweiligen Gerätetyps IP-Pakete übertragen darf, und dass
in Schritt i) mithilfe des Heimnetz-Routers (50) die Weiterleitung des vom Heimnetz-Endgerät (20) ausgehenden Datenverkehrs beendet oder die aktuelle Datenrate zur Weiterleitung des vom Heimnetz-Endgerät (20) ausgehenden Datenverkehrs auf die maximale Datenrate, die in dem in Schritt d) dem Heimnetz-Endgerät (20) zugeordneten Datenkommunikations-Nutzungsprofil festgelegt worden ist, begrenzt wird, wenn in Schritt h) festgestellt worden ist, dass die maximale Datenrate, die in dem in Schritt d) dem Heimnetz-Endgerät (20) zugeordneten Datenkommunikations-Nutzungsprofil festgelegt worden ist, vom Heimnetz-Endgerät (20) überschritten worden ist.

5. Verfahren nach einem der vorstehenden Ansprüche in Verbindung mit Anspruch 2,
**dadurch gekennzeichnet, dass**
wenigstens eines der in Schritt a) gespeicherten Heimnetz-Endgerätetyp-abhängigen Datenkommunikations-Nutzungsprofile als eine dritte Datenverkehrs-bezogene Information jeweils wenigstens ein zu verwendendes Kommunikationsprotokoll enthält, und dass
in Schritt i) mithilfe des Heimnetz-Routers (50) die Weiterleitung des vom Heimnetz-Endgerät (20) ausgehenden Datenverkehrs beendet oder verhindert wird, wenn in Schritt h) festgestellt worden ist, dass das vom Heimnetz-Endgerät (20) verwendete Kommunikationsprotokoll nicht mit dem Kommunikationsprotokoll, welches in dem in Schritt d) dem Heimnetz-Endgerät (20) zugeordneten Datenkommunikations-Nutzungsprofil enthalten ist, übereinstimmt.

6. Verfahren nach einem der vorstehenden Ansprüche,
**dadurch gekennzeichnet, dass**
als Kommunikationsprotokoll zur automatischen Zuweisung von Netzwerkkonfigurationsdaten das Dynamic Host Configuration Protocol (DHCP) verwendet wird, dass
die in Schritt c) übertragene Anforderungsnachricht eine DHCP-Discover-Nachricht ist, und dass
in Schritt f) die IP-Adresse in einer DHCP-Offer-Nachricht zum Heimnetz-Endgerät (20, 30) übertragen wird.

7. Verfahren nach einem der vorstehenden Ansprüche in Verbindung mit Anspruch 2,
**dadurch gekennzeichnet, dass**
zumindest einige der die in Schritt g) vom Heimnetz-Endgerät (20) übertragenen IP-Pakete jeweils eine Anforderungs-Nachricht, insbesondere eine HTTP GET Nachricht oder eine TCP SYN Verbindungsaufbau-Nachricht enthalten, dass wenigstens eines der in Schritt a) gespeicherten Heimnetz-Endgerätetyp-abhängigen Datenkommunikations-Nutzungsprofile als eine vierte Datenverkehrs-bezogene Information die maximale Anzahl an Anforderungs-Nachrichten enthalten, welche ein Heimnetz-Endgerät des jeweiligen Gerätetyps gleichzeitig oder während einer vorbestimmten Zeitspanne übertragen darf, und dass
in Schritt i) mithilfe des Heimnetz-Routers (50) die Weiterleitung eines vom Heimnetz-Endgerät (20) ausgehenden IP-Paktes, welches eine Anforderungs-Nachricht enthält, verhindert wird, wenn in Schritt h) festgestellt worden ist, dass die maximale Anzahl an Anforderungs-Nachrichten, welche in dem in Schritt d) dem Heimnetz-Endgerät (20) zugeordneten Datenkommunikations-Nutzungsprofil enthalten ist, überschritten werden.

8. Verfahren nach einem der vorstehenden Ansprüche,
**dadurch gekennzeichnet, dass**
die Schritte b) bis i) für wenigstens ein weiteres Heimnetz-Endgerät (30) wiederholt werden.

9. Kommunikationssystem (10) aufweisend:
- ein Heimnetz (40),
- wenigstens ein IP-fähiges Heimnetz-Endgerät (20, 30), welches eine Speichereinrichtung (23, 33), in der eine Gerätetyp-Information und ein Kommunikationsprotokolls zur automatischen Zuweisung von Netzwerkkonfigurationsdaten gespeichert sind, und eine Steuereinrichtung (21,31) aufweist, wobei dem IP-fähigen Heimnetz-Endgerät (20, 30) eine MAC-Adresse eindeutig zugeordnet ist, und
- wenigstens einen IP-fähigen Heimnetz-Router (50), welcher eine Speichereinrichtung (52), eine Steuereinrichtung (51) und eine Schnittstelle (53) zur Kommunikation mit einem externen IP-Kommunikationsnetz (60, 80), aufweist, wobei in der Speichereinrichtung (52) des Heimnetz-Routers (50) mehrerer Heimnetz-Endgerätetyp-abhängige Datenkommunikations-Nutzungsprofile gespeichert sind, wobei
das Heimnetz-Endgerät (20, 30) und der Heimnetz-Router (50) jeweils zur Kommunikation über das Heimnetz (40) ausgebildet sind, wobei
die Steuereinrichtung (21, 31) des Heimnetz-Endgeräts (20, 30) dazu ausgebildet ist, unter Verwendung des Kommunikationsprotokolls zur automatischen Zuweisung von Netzwerkkonfigurationsdaten das Heimnetz-Endgerät (20, 30) zu veranlassen, eine Anforderungsnachricht über das Heimnetz (40) zum IP-fähigen Heimnetz-Router (50) zu übertragen, wobei die Anforderungsnachricht die dem Heimnetz-Endgerät (20, 30) zugeordnete MAC-Adresse und die im Heimnetz-Endgerät (20, 30) gespeicherte Gerätetyp-Information enthält, wobei
die Steuereinrichtung (51) des Heimnetz-Routers (50) dazu ausgebildet ist den Heimnetz-Router (50) zu veranlassen,
- dem Heimnetz-Endgerät (20, 30) unter Ansprechen auf die empfangene Anforderungsnachricht eine IP-Adresse und, in Abhängigkeit von der Gerätetyp-Information, eines der gespeicherten Datenkommunikations-Nutzungsprofile zuzuordnen,
- in der Speichereinrichtung (52) des Heimnetz-Router (50) die MAC-Adresse und eine Verknüpfung zwischen der MAC-Adresse des Heimnetz-Endgeräts (20, 30) und dem Datenkommunikations-Nutzungsprofil, welche dem Heimnetz-Endgerät (20, 30) zugeordnet worden sind, zu speichern, und
die dem Heimnetz-Endgerät (20, 30) zugeordnete IP-Adresse zum Heimnetz-Endgerät (20, 30) zu übertragen, wobei
das Heimnetz-Endgerät (20, 30) ferner dazu ausgebildet ist, einen ausgehenden, IP-Pakete enthaltenden Datenverkehr zum Heimnetz-Router (50) zu übertragen, wobei
der Heimnetz-Router (50) ferner dazu ausgebildet ist,
den vom Heimnetz-Endgerät (20, 30) ausgehenden Datenverkehr zu empfangen und anhand der darin enthaltenen IP-Pakete auf Einhaltung des dem Heimnetz-Endgerät (20, 30) zugeordneten Datenkommunikations-Nutzungsprofils zu überprüfen, und
den vom Heimnetz-Endgerät (20, 30) ausgehenden Datenverkehr in Abhängigkeit von dem Ergebnis der ausgeführten Überprüfung zu steuern.

10. Kommunikationssystem nach Anspruch 9,
**dadurch gekennzeichnet, dass**
die in der Speichereinrichtung (52) des Heimnetz-Routers (50) gespeicherten Heimnetz-Endgerätetyp-abhängigen Datenkommunikations-Nutzungsprofile jeweils wenigstens eine Datenverkehrs-bezogene Information enthalten, die einen Schwellenwert festlegt, und dass
der Heimnetz-Router (50) dazu ausgebildet ist, den vom Heimnetz-Endgerät (20, 30) ausgehenden Datenverkehrs auf den jeweiligen Schwellenwert zu begrenzen.

11. Kommunikationssystem nach Anspruch 10,
**dadurch gekennzeichnet, dass**
wenigstens eines der in der Speichereinrichtung (52) des Heimnetz-Routers (50) gespeicherten Heimnetz-Endgerätetyp-abhängigen Datenkommunikations-Nutzungsprofile als eine erste Datenverkehrs-Information die maximale Anzahl von TCP-Kommunikationsverbindungen, die gleichzeitig von einem Heimnetz-Endgerät des jeweiligen Gerätetyps aufgebaut werden dürfen, enthält, und dass der Heimnetz-Router (50) dazu ausgebildet ist, den Aufbau einer weiteren TCP-Kommunikationsverbindung durch das Heimnetz-Endgerät (20, 30) zu verhindern, wenn der Heimnetz-Router (50) bei der Überprüfung des Datenverkehrs auf Einhaltung des dem Heimnetz-Endgerät (20, 30) zugeordneten Datenkommunikations-Nutzungsprofils anhand der im Datenverkehr enthaltenen IP-Pakete festgestellt hat, dass die maximale Anzahl von parallelen TCP-Kommunikationsverbindungen, die in dem, dem Heimnetz-Endgerät (20, 30) zugeordneten Datenkommunikations-Nutzungsprofil festgelegt worden ist, vom Heimnetz-Endgerät (20, 30) bereits aufgebaut worden sind und vom Heimnetz-Endgerät (20, 30) der Aufbau von wenigstens einer weiteren TCP-Kommunikationsverbindung eingeleitet worden ist.

12. Kommunikationssystem nach Anspruch 10 oder 11,
**dadurch gekennzeichnet, dass**
wenigstens eines der in der Speichereinrichtung (52) des Heimnetz-Routers (50) gespeicherten Heimnetz-Endgerätetyp-abhängigen Datenkommunikations-Nutzungsprofile als eine zweite Datenverkehrs-Information die maximale Datenrate enthält, mit ein Heimnetz-Endgerät des jeweiligen Gerätetyps IP-Pakete übertragen darf, und dass
der Heimnetz-Router (50) dazu ausgebildet ist, die Weiterleitung des vom Heimnetz-Endgerät (20, 30) ausgehenden Datenverkehrs zu beenden oder die aktuelle Datenrate zur Weiterleitung des vom Heimnetz-Endgerät (20, 30) ausgehenden Datenverkehrs auf die maximale Datenrate, die in dem, dem Heimnetz-Endgerät (20, 30) zugeordneten Datenkommunikations-Nutzungsprofil festgelegt worden ist, zu begrenzen, wenn der Heimnetz-Router (50) bei der Überprüfung des Datenverkehrs auf Einhaltung des dem Heimnetz-Endgerät (20, 30) zugeordneten Datenkommunikations-Nutzungsprofils anhand der im Datenverkehr enthaltenen IP-Pakete festgestellt hat, dass die maximale Datenrate, die in dem dem Heimnetz-Endgerät (20, 30) zugeordneten Datenkommunikations-Nutzungsprofil festgelegt worden ist, vom Heimnetz-Endgerät (20, 30) überschritten worden ist.

13. Kommunikationssystem nach einem der Ansprüche 9 bis 12,
**dadurch gekennzeichnet, dass**
die in der Speichereinrichtung (52) des Heimnetz-Routers (50) gespeicherten Heimnetz-Endgerätetyp-abhängigen Datenkommunikations-Nutzungsprofile als eine dritte Datenverkehrs-Information jeweils wenigstens ein zu verwendendes Kommunikationsprotokoll enthalten, und dass
der Heimnetz-Router (50) dazu ausgebildet ist, die Weiterleitung des vom Heimnetz-Endgerät (20, 30) ausgehenden Datenverkehrs zu beenden oder zu verhindern, wenn der Heimnetz-Router (50) bei der Überprüfung des Datenverkehrs auf Einhaltung des dem Heimnetz-Endgerät (20, 30) zugeordneten Datenkommunikations-Nutzungsprofils anhand der im Datenverkehr enthaltenen IP-Pakete festgestellt hat, dass das vom Heimnetz-Endgerät (20, 30) verwendete Kommunikationsprotokoll nicht mit dem Kommunikationsprotokoll, welches in dem, dem Heimnetz-Endgerät (20, 30) zugeordneten Datenkommunikations-Nutzungsprofil enthalten ist, übereinstimmt.

14. Kommunikationssystem nach einem der Ansprüche 9 bis 13,
**dadurch gekennzeichnet, dass**
das Heimnetz-Endgerät (20, 30) und der Heimnetz-Router (50) jeweils dazu ausgebildet sind, als Kommunikationsprotokoll zur automatischen Zuweisung von Netzwerkkonfigurationsdaten das Dynamic Host Configuration Protocol (DHCP) auszuführen, dass
das Heimnetz-Gerät (20, 30) dazu ausgebildet ist, als Anforderungsnachricht eine DHCP-Discover-Nachricht zu erzeugen und die gespeicherte Gerätetyp-Information in die DHCP-Discover-Nachricht einzufügen, und dass der Heimnetz-Router (50) dazu ausgebildet ist, die dem Heimnetz-Endgerät (20, 30) zugeordnete IP-Adresse in einer DHCP-Offer-Nachricht zum Heimnetz-Endgerät (20, 30) zu übertragen.

15. Kommunikationssystem nach einem der Ansprüche 9 bis 14,
**dadurch gekennzeichnet, dass**
das Heimnetz-Endgerät (20, 30) dazu ausgebildet ist, einen ausgehenden Datenverkehr zu erzeugen, der IP-Pakete aufweisen kann, in denen jeweils eine Anforderungs-Nachricht, insbesondere eine HTTP GET Nachrichten oder TCP SYN Verbindungsaufbau-Nachrichten enthalten sind, dass
wenigstens eines der in der Speichereinrichtung (52) des Heimnetz-Routers (50) gespeicherten Heimnetz-Endgerätetyp-abhängigen Datenkommunikations-Nutzungsprofile als eine vierte Datenverkehrs-bezogene Information jeweils die maximale Anzahl an Anforderungs-Nachrichten enthält, welche ein Heimnetz-Endgerät (20, 30) des jeweiligen Gerätetyps gleichzeitig oder während einer vorbestimmten Zeitspanne übertragen darf, und dass
der Heimnetz-Router (50) dazu ausgebildet ist, die Weiterleitung eines vom Heimnetz-Endgerät (20, 30) ausgehenden IP-Paktes, welches eine Anforderungs-Nachricht enthält, zu verhindern, wenn der Heimnetz-Router (50) festgestellt hat, dass die maximale Anzahl an Anforderungs-Nachrichten, welche in dem, dem Heimnetz-Endgerät (20, 30) zugeordneten Datenkommunikations-Nutzungsprofil enthalten ist, vom Heimnetz-Endgerät (20, 30) überschritten wird.

## Claims

1. A method for checking and controlling data traffic containing IP packets originating from an IP-capable home network terminal (20), wherein the home network terminal (20) is connectable via a home network (40) to an IP-capable home network router (50) which has an interface (53) for communication with an external IP communication network (60, 80), comprising the following method steps:
a) storing, in the IP-enabled home network router (50), a plurality of home network terminal type-dependent data communication usage profiles;
b) storing, in the IP-enabled home network terminal (20), a device type information and a MAC address associated with the home network terminal (20);
c) transmitting, from the home network terminal (20), using a communication protocol for automatically assigning network configuration data, a request message via the home network (40) to the IP-enabled home network router (50), the request message including the MAC address and device type information stored in step b);
d) assigning, by the home network router (50), to the home network terminal (20), in response to the received request message, an IP address and, depending on the device type information, one of the data communication usage profiles stored in step a);
e) storing, in the home network router (50), the MAC address of the home network terminal (20) and association information linking the data communication usage profile associated with the home network terminal (20) in step d) to the MAC address of the home network terminal (20);
f) transmitting, from the home network router (50), the IP address assigned to the home network terminal device in step d) to the home network terminal device (20);
g) transmitting IP packets from the home network terminal (20) to the home network router (50);
h) checking, by the home network router (50), the data traffic outgoing from the home network terminal (20) on the basis of the IP packets received in step g) for compliance with the data communication usage profile assigned to the home network terminal (20) in step d); and
i) controlling, by the home network router (50), the data traffic outgoing from the home network terminal (20) depending on the result of the check performed in step h).

2. The method according to claim 1,
**characterized in that**
the home network terminal type-dependent data communication usage profiles stored in step a) each contain at least one piece of data traffic-related information which defines a threshold value, and **in that**
step i) includes limiting the data traffic originating from the home network terminal (20) to the respective threshold value by the home network router (50).

3. The method according to claim 2,
**characterized in that**
at least one of the home network terminal type-dependent data communication usage profiles stored in step a) contains, as a first piece of data traffic-related information, the maximum number of TCP communication connections which may be established simultaneously by a home network terminal of the respective device type, and **in that**
in step i), the establishment of a further TCP communication connection by the home network terminal (20) is prevented with the aid of the home network router (50) if it has been determined in step h) that the maximum number of parallel TCP communication connections, which has been defined in the data communication usage profile assigned to the home network terminal in step d), has already been established by the home network terminal (20) and the establishment of at least one further TCP communication connection has been initiated by the home network terminal (20).

4. The method according to claim 2 or 3,
**characterized in that**
at least one of the home network terminal type-dependent data communication usage profiles stored in step a) contains the maximum data rate at which a home network terminal of the respective device type may transmit IP packets as a second piece of data traffic-related information, and **in that** in step i), with the aid of the home network router (50), the forwarding of the data traffic originating from the home network terminal (20) is terminated or the current data rate for forwarding the data traffic originating from the home network terminal (20) is limited to the maximum data rate which has been defined in the data communication usage profile assigned to the home network terminal (20) in step d), if it has been determined in step h) that the home network terminal (20) has exceeded the maximum data rate defined in the data communication usage profile assigned to the home network terminal (20) in step d).

5. The method according to one of the preceding claims in conjunction with claim 2,
**characterized in that**
at least one of the home network terminal type-dependent data communication usage profiles stored in step a) contains at least one communication protocol to be used as a third piece of data traffic-related information, and **in that** in step i), with the aid of the home network router (50) the forwarding of the data traffic originating from the home network terminal (20) is terminated or prevented if it has been determined in step h) that the communication protocol used by the home network terminal (20) does not match the communication protocol contained in the data communication usage profile assigned to the home network terminal (20) in step d).

6. The method according to one of the preceding claims,
**characterized in that**
the Dynamic Host Configuration Protocol (DHCP) is used as the communication protocol for automatically assigning network configuration data, **in that** the request message transmitted in step c) is a DHCP discover message, and that in step f) the IP address is transmitted in a DHCP offer message to the home network terminal (20, 30).

7. The method according to one of the preceding claims in conjunction with claim 2,
**characterized in that**
at least some of the IP packets transmitted by the home network terminal (20) in step g) each contain a request message, in particular an HTTP GET message or a TCP SYN connection establishment message, **in that**
at least one of the home network terminal type-dependent data communication usage profiles stored in step a) contains, as a fourth piece of data traffic-related information, the maximum number of request messages which a home network terminal of the respective device type may transmit simultaneously or during a predetermined period of time, and **in that**
in step i), with the aid of the home network router (50) the forwarding of an IP packet containing a request message originating from the home network terminal (20) is prevented if it has been determined in step h) that the maximum number of request messages contained in the data communication usage profile assigned to the home network terminal (20) in step d) is exceeded.

8. The method according to one of the preceding claims,
**characterized in that**
steps b) to i) are repeated for at least one further home network terminal (30).

9. A communication system (10) comprising
- a home network (40),
- at least one IP-capable home network terminal (20, 30) having memory means (23, 33) in which device type information and a communication protocol for automatically assigning network configuration data are stored, and a control device (21, 31), wherein a MAC address is uniquely assigned to the IP-capable home network terminal (20, 30), and
- at least one IP-capable home network router (50), which has a memory device (52), a control device (51) and an interface (53) for communication with an external IP communication network (60, 80), wherein a plurality of home network terminal type-dependent data communication usage profiles are stored in the memory device (52) of the home network router (50), wherein
the home network terminal (20, 30) and the home network router (50) are each designed for communication via the home network (40), wherein
the control device (21, 31) of the home network terminal (20, 30) is designed to cause the home network terminal (20, 30) to transmit a request message via the home network (40) to the IP-capable home network router (50) using the communication protocol for automatic assignment of network configuration data, the request message containing the MAC address assigned to the home network terminal (20, 30) and the device type information stored in the home network terminal (20, 30), wherein
the control device (51) of the home network router (50) is designed to cause the home network router (50),
- to assign an IP address and, depending on the device type information, one of the stored data communication usage profiles to the home network terminal (20, 30) in response to the received request message,
- to store in the memory device (52) of the home network router (50) the MAC address and a link between the MAC address of the home network terminal (20, 30) and the data communication usage profile which have been assigned to the home network terminal (20, 30), and
to transmit the IP address assigned to the home network terminal (20, 30) to the home network terminal (20, 30), wherein
the home network terminal (20, 30) is further designed to transmit outgoing data traffic containing IP packets to the home network router (50), wherein
the home network router (50) is further configured to
receive the outgoing data traffic from the home network terminal (20, 30) and to check compliance with the data communication usage profile assigned to the home network terminal (20, 30) on the basis of the IP packets contained therein, and
to control the outgoing data traffic from the home network terminal (20, 30) depending on the result of the check carried out.

10. The communication system according to claim 9,
**characterized in that**
the home network terminal type-dependent data communication usage profiles stored in the memory device (52) of the home network router (50) each contain at least one piece of data traffic-related information which defines a threshold value, and **in that**
the home network router (50) is designed to limit the data traffic emanating from the home network terminal (20, 30) to the respective threshold value.

11. The communication system according to claim 10,
**characterized in that**
at least one of the home network terminal type-dependent data communication usage profiles stored in the memory device (52) of the home network router (50) contains, as a first piece of data traffic information, the maximum number of TCP communication connections which may be established simultaneously by a home network terminal of the respective device type, and **in that** the home network router (50) is designed to prevent the establishment of a further TCP communication connection by the home network terminal (20, 30) if the home network router (50), when checking the data traffic for compliance with the data communication usage profile assigned to the home network terminal (20, 30), has determined on the basis of the IP packets contained in the data traffic, that the maximum number of parallel TCP communication connections defined in the data communication usage profile assigned to the home network terminal (20, 30) has already been established by the home network terminal (20, 30) and the establishment of at least one further TCP communication connection has been initiated by the home network terminal (20, 30).

12. The communication system according to claim 10 or 11,
**characterized in that**
at least one of the home network terminal type-dependent data communication usage profiles stored in the memory device (52) of the home network router (50) contains, as a second piece of data traffic information, the maximum data rate at which a home network terminal of the respective device type may transmit IP packets, and **in that**
the home network router (50) is designed to terminate the forwarding of the data traffic outgoing from the home network terminal (20, 30) or to limit the current data rate for forwarding the data traffic outgoing from the home network terminal (20, 30) to the maximum data rate which has been defined in the data communication usage profile assigned to the home network terminal (20, 30), if the home network router (50), when checking the data traffic for compliance with the data communication usage profile assigned to the home network terminal (20, 30), has determined on the basis of the IP packets contained in the data traffic that the maximum data rate defined in the data communication usage profile assigned to the home network terminal (20, 30) has been exceeded by the home network terminal (20, 30).

13. The communication system according to any one of claims 9 to 12,
**characterized in that**
the home network terminal type-dependent data communication usage profiles stored in the memory device (52) of the home network router (50) each contain at least one communication protocol to be used as a third piece of data traffic information, and **in that**
the home network router (50) is designed to terminate or prevent the forwarding of the data traffic originating from the home network terminal (20, 30) if the home network router (50), when checking the data traffic for compliance with the data communication usage profile assigned to the home network terminal (20, 30) has determined, on the basis of the IP packets contained in the data traffic, that the communication protocol used by the home network terminal (20, 30) does not match the communication protocol contained in the data communication usage profile assigned to the home network terminal (20, 30).

14. The communication system according to any one of claims 9 to 13,
**characterized in that**
the home network terminal (20, 30) and the home network router (50) are each designed to execute the Dynamic Host Configuration Protocol (DHCP) as the communication protocol for automatically assigning network configuration data, **in that**
the home network device (20, 30) is designed to generate a DHCP discover message as a request message and to insert the stored device type information into the DHCP discover message, and **in that**
the home network router (50) is designed to transmit the IP address assigned to the home network terminal device (20, 30) in a DHCP offer message to the home network terminal device (20, 30).

15. The communication system according to any one of claims 9 to 14,
**characterized in that**
the home network terminal (20, 30) is configured to generate an outgoing data traffic which may comprise IP packets each containing a request message, in particular an HTTP GET message or TCP SYN connection establishment messages, that
at least one of the home network terminal type-dependent data communication usage profiles stored in the memory device (52) of the home network router (50) contains, as a fourth piece of data traffic-related information, the maximum number of request messages which a home network terminal (20, 30) of the respective device type may transmit simultaneously or during a predetermined period of time, and **in that**
the home network router (50) is designed to prevent the forwarding of an IP packet containing a request message originating from the home network terminal (20, 30) if the home network router (50) has determined that the maximum number of request messages contained in the data communication usage profile assigned to the home network terminal (20, 30) is exceeded by the home network terminal (20, 30).

## Revendications

1. Procédé de vérification et de commande d'un trafic de données comprenant des paquets IP sortant d'un terminal (20) du réseau domestique compatible IP, dans lequel ledit terminal (20) du réseau domestique peut être connecté par l'intermédiaire d'un réseau domestique (40) compatible IP à un routeur (50) du réseau domestique compatible IP, lequel comporte une interface (53) permettant de communiquer avec un réseau de communication IP (60, 80) externe, comprenant les étapes de procédé suivantes :
a) la mémorisation, au niveau du routeur (50) du réseau domestique compatible IP, d'une pluralité de profils d'utilisation de la communication de données dépendant du type de terminal du réseau domestique ;
b) la mémorisation, au niveau du terminal (20) du réseau domestique compatible IP, des informations sur le type d'appareil et d'une adresse MAC, lesquelles sont attribuées au terminal (20) du réseau domestique ;
c) la transmission, depuis le terminal (20) du réseau domestique, à l'aide d'un protocole de communication permettant d'attribuer automatiquement des données de configuration réseau, d'un message de demande par l'intermédiaire du réseau domestique (40) au routeur (50) du réseau domestique compatible IP, le message de demande comprenant l'adresse MAC et les informations de type d'appareil mémorisées dans l'étape b) ;
d) l'attribution, par le routeur (50) du réseau domestique, au terminal (20) du réseau domestique en réponse au message de demande reçu d'une adresse IP et, en fonction des informations de type d'appareil, de l'un des profils d'utilisation de la communication de données mémorisés dans l'étape a) ;
e) la mémorisation, au niveau du routeur (50) du réseau domestique, de l'adresse MAC du terminal (20) du réseau domestique et des informations d'attribution, lesquelles relient le profil d'utilisation de la communication de données attribué au terminal (20) du réseau domestique dans l'étape d) à l'adresse MAC du terminal (20) du réseau domestique ;
f) la transmission, depuis le routeur (50) du réseau domestique, de l'adresse IP attribuée au terminal du réseau domestique dans l'étape d) au terminal (20) du réseau domestique ;
g) la transmission des paquets IP du terminal (20) du réseau domestique au routeur (50) du réseau domestique ;
h) la vérification, par le routeur (50) du réseau domestique, du trafic de données sortant du terminal (20) du réseau domestique au moyen des paquets IP reçus dans l'étape g) pour vérifier la conformité du profil d'utilisation de la communication de données attribué au terminal (20) du réseau domestique dans l'étape d) ; et
i) la commande, par le routeur (50) du réseau domestique, du trafic de données sortant du terminal (20) du réseau domestique en fonction du résultat de la vérification effectué dans l'étape h).

2. Procédé selon la revendication 1,
**caractérisé en ce que**
les profils d'utilisation de la communication de données dépendant du type de terminal du réseau domestique mémorisés dans l'étape a) comprennent respectivement au moins une information relative au trafic de données, laquelle détermine une valeur seuil, et **en ce que** l'étape i) comprend la limitation du trafic de données sortant du terminal (20) du réseau domestique à la valeur seuil respective par le routeur (50) du réseau domestique.

3. Procédé selon la revendication 2,
**caractérisé en ce que**
l'au moins un des profils d'utilisation de la communication de données dépendant du type de terminal du réseau domestique enregistrés dans l'étape a) comprend en tant que première information relative au trafic de données, le nombre maximal de connexions de communication TCP, lesquelles peuvent être établies simultanément par un terminal du réseau domestique du type d'appareil respectif, et **en ce que** dans l'étape i), à l'aide du routeur (50) du réseau domestique, l'établissement d'une autre connexion de communication TCP par le terminal (20) du réseau domestique est empêché lorsqu'il a été déterminé dans l'étape h) que le nombre maximal de connexions de communication TCP parallèles, lequel a été spécifié dans le profil d'utilisation de la communication de données attribué au terminal du réseau domestique dans l'étape d), a déjà été établi par le terminal (20) du réseau domestique et l'établissement d'au moins une autre connexion de communication TCP a été provoquée par le terminal (20) du réseau domestique.

4. Procédé selon la revendication 2 ou 3,
**caractérisé en ce que**
l'au moins un des profils d'utilisation de la communication de données dépendant du type de terminal du réseau domestique mémorisés dans l'étape a) comprend, en tant que deuxième information relative au trafic de données, le débit de données maximal auquel le terminal du réseau domestique du type d'appareil respectif peut transmettre les paquets IP, et **en ce que**
dans l'étape i), à l'aide du routeur (50) du réseau domestique, la transmission du trafic de données sortant du terminal (20) du réseau domestique est terminée ou le débit de données actuel pour la transmission du trafic de données sortant du terminal (20) du réseau domestique est limité au débit de données maximal, lequel a été déterminé dans le profil d'utilisation de la communication de données attribué au terminal (20) du réseau domestique dans l'étape d) lorsqu'il a été déterminé dans l'étape h) que le débit de données maximal qui a été déterminé dans le profil d'utilisation de la communication de données attribué au terminal (20) du réseau domestique dans l'étape d) a été dépassé par le terminal (20) du réseau domestique.

5. Procédé selon l'une quelconque des revendications précédentes dépendante de la revendication 2,
**caractérisé en ce que**
l'au moins un des profils d'utilisation de la communication de données dépendant du type de terminal du réseau domestique mémorisés dans l'étape a) comprend l'au moins un protocole de communication à utiliser en tant que troisième information relative au trafic de données, et **en ce que**
dans l'étape i), à l'aide du routeur (50) du réseau domestique, la transmission du trafic de données sortant du terminal (20) du réseau domestique est interrompue ou empêchée lorsqu'il a été déterminé dans l'étape h) que le protocole de communication utilisé par le terminal (20) du réseau domestique ne correspond pas au protocole de communication qui est compris dans le profil d'utilisation de la communication de données attribué au terminal (20) du réseau domestique dans l'étape d).

6. Procédé selon l'une quelconque des revendications précédentes,
**caractérisé en ce que**
le protocole de configuration d'hôte dynamique (Dynamic Host Configuration Protocol - (DHCP)) est utilisé en tant que protocole de communication pour attribuer automatiquement des données de configuration réseau, **en ce que**
le message de demande transmis dans l'étape c) est un message DHCP Discover, et **en ce que**
dans l'étape f), l'adresse IP est transmise dans un message DHCP-Offer au terminal (20, 30) du réseau domestique.

7. Procédé selon l'une quelconque des revendications précédentes dépendante de la revendication 2,
**caractérisé en ce que**
les au moins certains des paquets IP transmis dans l'étape g) par le terminal (20) du réseau domestique comprennent respectivement un message de demande, en particulier un message HTTP GET ou un message d'établissement de connexion TCP SYN, **en ce que** l'au moins un des profils d'utilisation de la communication de données dépendant du type de terminal du réseau domestique mémorisés dans l'étape a) comprend, en tant que quatrième information relative au trafic de données, le nombre maximal de messages de demande qu'un terminal du réseau domestique du type d'appareil respectif peut transmettre simultanément ou pendant une période de temps prédéterminée, et **en ce que** dans l'étape i), à l'aide du routeur (50) du réseau domestique, la transmission d'un paquet IP sortant du terminal (20) du réseau domestique, lequel comprend un message de demande, est empêchée lorsqu'il a été déterminé dans l'étape h) que le nombre maximal de messages de demande, qui est compris dans le profil d'utilisation de la communication de données attribué au terminal (20) du réseau domestique dans l'étape d), a été dépassé.

8. Procédé selon l'une quelconque des revendications précédentes,
**caractérisé en ce que**
les étapes b) à i) sont répétées pour l'au moins un autre terminal (30) du réseau domestique.

9. Système de communication (10) comprenant :
- un réseau domestique (40),
- au moins un terminal (20, 30) du réseau domestique compatible IP, lequel comporte un dispositif mémoire (23, 33) dans lequel sont mémorisées les informations de type d'appareil et un protocole de communication pour attribuer automatiquement des données de configuration du réseau, et un dispositif de commande (21, 31), une adresse MAC étant attribuée de manière univoque au terminal (20, 30) du réseau domestique compatible IP, et
- au moins un routeur (50) du réseau domestique compatible IP, lequel comporte un dispositif mémoire (52), un dispositif de commande (51) et une interface (53) permettant de communiquer avec un réseau de communication IP (60, 80) externe, dans le dispositif mémoire (52) du routeur (50) du réseau domestique étant mémorisés une pluralité de profils d'utilisation de la communication de données dépendant du type de terminal du réseau domestique,
le terminal (20, 30) du réseau domestique et le routeur (50) du réseau domestique étant respectivement conçus pour communiquer par l'intermédiaire du réseau domestique (40), le dispositif de commande (21, 31) du terminal (20, 30) du réseau domestique étant conçu pour amener, au moyen du protocole de communication, le terminal (20, 30) du réseau domestique à attribuer automatiquement les données de configuration du réseau, pour transmettre un message de demande par l'intermédiaire du réseau domestique (40) au routeur (50) du réseau domestique compatible IP, le message de demande comprenant l'adresse MAC attribuée au terminal (20, 30) du réseau domestique et les informations de type d'appareil mémorisées dans le terminal (20, 30) du réseau domestique, le dispositif de commande (51) du routeur (50) du réseau domestique étant conçu pour amener le routeur (50) du réseau domestique
- à attribuer au terminal (20, 30) du réseau domestique, en réponse au message de demande reçu, une adresse IP et, en fonction des informations de type d'appareil, l'un des profils d'utilisation de la communication de données mémorisés,
- à mémoriser, dans le dispositif mémoire (52) du routeur (50) du réseau domestique, l'adresse MAC et un lien entre l'adresse MAC du terminal (20, 30) du réseau domestique et le profil d'utilisation de la communication de données, lesquels ont été attribués au terminal (20, 30) du réseau domestique, et
à transmettre l'adresse IP attribuée au terminal (20, 30) du réseau domestique au terminal (20, 30) du réseau domestique,
le terminal (20, 30) du réseau domestique étant en outre conçu pour transmettre le trafic de données sortant comportant des paquets IP au routeur (50) du réseau domestique,
le routeur (50) du réseau domestique étant en outre conçu pour
recevoir le trafic de données sortant du terminal (20, 30) du réseau domestique et pour vérifier, au moyen des paquets IP compris, la conformité avec le profil d'utilisation de la communication de données attribué au terminal (20, 30) du réseau domestique, et
pour commander le trafic de données sortant du terminal (20, 30) du réseau domestique en fonction du résultat de la vérification effectuée.

10. Système de communication selon la revendication 9,
**caractérisé en ce que**
les profils d'utilisation de la communication de données dépendant du type de terminal du réseau domestique mémorisés dans le dispositif mémoire (52) du routeur (50) du réseau domestique comprennent respectivement au moins une information relative au trafic de données, laquelle détermine une valeur seuil, et **en ce que**
le routeur (50) du réseau domestique est conçu pour limiter le trafic de données sortant du terminal (20, 30) du réseau domestique à la valeur seuil respective.

11. Système de communication selon la revendication 10,
**caractérisé en ce que**
l'au moins un des profils d'utilisation de la communication de données dépendant du type de terminal du réseau domestique mémorisés dans le dispositif mémoire (52) du routeur (50) du réseau domestique comprend, en tant que première information du trafic de données, le nombre maximal de connexions de communication TCP, lesquelles peuvent être établies simultanément par un terminal du réseau domestique du type d'appareil respectif, et **en ce que** le routeur (50) du réseau domestique est conçu pour empêcher l'établissement d'une autre connexion de communication TCP par le terminal (20, 30) du réseau domestique lorsque le routeur (50) du réseau domestique, lors de la vérification du trafic de données pour la conformité avec le profil d'utilisation de la communication de données attribué au terminal (20, 30) du réseau domestique au moyen des paquets IP compris dans le trafic de données, a déterminé que le nombre maximal de connexions de communication TCP parallèles, lequel a été déterminé dans le profil d'utilisation de la communication de données attribué au terminal (20, 30) du réseau domestique, a déjà été établi par le terminal (20, 30) du réseau domestique, et l'établissement de l'au moins une autre connexion de communication TCP a été provoqué par le terminal (20, 30) du réseau domestique.

12. Système de communication selon la revendication 10 ou 11,
**caractérisé en ce que**
l'au moins un des profils d'utilisation de la communication de données dépendant du type de terminal du réseau domestique mémorisés dans le dispositif mémoire (52) du routeur (50) du réseau domestique comprend, en tant que deuxième information du trafic de données, le débit de données maximal auquel le terminal du réseau domestique du type de dispositif respectif peut transmettre des paquets IP, et **en ce que**
le routeur (50) du réseau domestique est conçu pour terminer la transmission du trafic de données sortant du terminal (20, 30) du réseau domestique ou pour limiter le débit de données actuel pour la transmission du trafic de données sortant du terminal (20, 30) du réseau domestique au débit de données maximal, lequel a été déterminé dans le profil d'utilisation de la communication de données attribué au terminal (20, 30) du réseau domestique lorsque le routeur (50) du réseau domestique, lors de la vérification de la conformité du trafic de données avec le profil d'utilisation de la communication de données attribué au terminal (20, 30) du réseau domestique au moyen des paquets IP compris dans le trafic de données, a déterminé que le débit de données maximal, lequel a été déterminé dans le profil d'utilisation de la communication de données attribué au terminal (20, 30) du réseau domestique, a été dépassé par le terminal (20, 30) du réseau domestique.

13. Système de communication selon l'une quelconque des revendications 9 à 12,
**caractérisé en ce que**
les profils d'utilisation de la communication de données dépendant du type de terminal du réseau domestique mémorisés dans le dispositif mémoire (52) du routeur (50) du réseau domestique comprennent respectivement au moins un protocole de communication à utiliser en tant que troisième information du trafic de données, et **en ce que**
le routeur (50) du réseau domestique est conçu pour terminer ou empêcher la transmission du trafic de données sortant du terminal (20, 30) du réseau domestique lorsque le routeur (50) du réseau domestique, lors de la vérification de la conformité du trafic de données avec le profil d'utilisation de la communication de données attribué au terminal (20, 30) du réseau domestique au moyen des paquets IP compris dans le trafic de données, a déterminé que le protocole de communication utilisé par le terminal (20, 30) du réseau domestique ne correspond pas au protocole de communication compris dans le profil d'utilisation de la communication de données attribué au terminal (20, 30) du réseau domestique.

14. Système de communication selon l'une quelconque des revendications 9 à 13,
**caractérisé en ce que**
le terminal (20, 30) du réseau domestique et le routeur (50) du réseau domestique sont respectivement conçus pour exécuter, en tant que protocole de communication pour attribuer automatiquement des données de configuration du réseau, le protocole de configuration d'hôte dynamique (Dynamic Host Configuration Protocol - (DHCP)), **en ce que**
l'appareil (20, 30) du réseau domestique est conçu pour générer un message DHCP Discover en tant que message de demande et pour insérer les informations de type d'appareil mémorisées dans le message DHCP Discover, et **en ce que**
le routeur (50) du réseau domestique est conçu pour transmettre l'adresse IP attribuée au terminal (20, 30) du réseau domestique dans un message DHCP Offer au terminal (20, 30) du réseau domestique.

15. Système de communication selon l'une quelconque des revendications 9 à 14,
**caractérisé en ce que**
le terminal (20, 30) du réseau domestique est conçu pour générer un trafic de données sortant, lequel peut comprendre des paquets IP comprenant respectivement un message de demande, en particulier un message HTTP GET ou un message d'établissement de connexion TCP SYN, **en ce que**
l'au moins un des profils d'utilisation de la communication de données dépendant du type de terminal du réseau domestique mémorisés dans le dispositif mémoire (52) du routeur (50) du réseau domestique comprend, en tant que quatrième information relative au trafic de données, le nombre maximal de messages de demande, qu'un terminal (20, 30) du réseau domestique du type d'appareil respectif peut transmettre simultanément ou pendant une période de temps prédéterminée, et **en ce que**
le routeur (50) du réseau domestique est conçu pour empêcher la transmission du paquet IP sortant du terminal (20, 30) du réseau domestique, lequel comprend le message de demande lorsque le routeur (50) du réseau domestique a déterminé que le terminal (20, 30) du réseau domestique a dépassé le nombre maximal de messages de demande compris dans le profil d'utilisation de la communication de données attribué au terminal (20, 30) du réseau domestique.
